(19) Europäisches Patentamt
European Patent Office
Office européen des brevets

(11) EP 4 764 978 A1

(12) **EUROPEAN PATENT APPLICATION**
published in accordance with Art. 153(4) EPC

(43) Date of publication:
24.06.2026 Bulletin 2026/26

(21) Application number: 23949652.4

(22) Date of filing: 18.08.2023

(51) International Patent Classification (IPC):
*G06N 10/70* (2022.01)

(52) Cooperative Patent Classification (CPC):
G06N 10/70

(86) International application number:
PCT/JP2023/029841

(87) International publication number:
WO 2025/041190 (27.02.2025 Gazette 2025/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: FUJITSU LIMITED
Kawasaki-shi, Kanagawa 211-8588 (JP)

(72) Inventor: MORITA, Mikio
Kawasaki-shi, Kanagawa 211-8588 (JP)

(74) Representative: Haseltine Lake Kempner LLP
Cheapside House
138 Cheapside
London EC2V 6BJ (GB)

(54) **INFORMATION PROCESSING PROGRAM, INFORMATION PROCESSING METHOD, AND INFORMATION PROCESSING DEVICE**

(57) The impact of errors on the computation result is mitigated.

An information processing apparatus (10) instructs a quantum computer (1) to execute a quantum circuit (2) in which, among first qubits having a predetermined attribute included in a plurality of qubits (3), a predetermined number of first qubits are in a state $|1\rangle$ before a gate operation specified by a first subcircuit (4). The information processing apparatus (10) acquires, from the quantum computer (1), a measurement result indicating the state of each of the plurality of qubits (3) after gate operations specified by the quantum circuit (2). The information processing apparatus (10) calculates, based on the states of the first qubits indicated by the measurement result, the number of first qubits that are in the state $|1\rangle$ after the gate operation specified by the first subcircuit (4). Then, the information processing apparatus (10) discards the measurement result, if the number of first qubits that are in the state $|1\rangle$ after the gate operation specified by the first subcircuit (4) is different from the predetermined number.

FIG. 1

**Description**

Technical Field

The embodiments discussed herein relate to an information processing program, an information processing method, and an information processing apparatus.

Background Art

In the field of quantum computers, the practical use of noisy intermediate-scale quantum (NISQ) computers is expected. An NISQ computer is a medium-scale quantum computer without error correction functionality. One application of NISQ computers is computation using a variational quantum eigensolver (VQE). VQE is a variational algorithm for determining the ground state of a quantum many-body system. VQE may be used to perform quantum chemical calculations on an NISQ computer, for example. The quantum chemical calculations are computational methods for obtaining molecular states and physical property information by solving the Schrödinger equation. At present, various studies have been conducted for the practical use of computation using VQE.

One problem for the practical use of VQE is that hardware-derived noise deteriorates the computational accuracy. Since NISQ computers do not have error correction functionality, the impact of errors leads to incorrect computation results.

As countermeasures against such errors, for example, there have been proposed a quantum computing system and method for quantum error mitigation. Further, there has been proposed a method for calibrating a quantum measurement device. Still further, there has been proposed a method of debugging a quantum circuit so that computation is performed with reduced errors. Yet still further, there has been proposed error-mitigated digital quantum simulation.

Citation List

Patent Literature

PTL1: Japanese National Publication of International Patent Application No. 2023-501752
PTL2: Japanese Laid-open Patent Publication No. 2022-088556
PTL3: U.S. Patent Application Publication No. 2022/0383179

Non-Patent Literature

NPTL1: Sam McArdle, Xiao Yuan, and Simon Benjamin, "Error-Mitigated Digital Quantum Simulation", PHYSICAL REVIEW LETTERS, American Physical Society, 8 May 2019, vol. 122, 180501

Summary of Invention

Technical Problem

In quantum computers, it is difficult to completely eliminate errors, even with techniques for reducing the occurrence of errors. Therefore, it is desired that, when an error occurs, the impact of the error on the computation result is mitigated.

In one aspect, the present application is intended to mitigate the impact of errors on the computation result.

Solution to Problem

According to one aspect, there is provided an information processing program that causes a computer to perform the following process.

The computer instructs a quantum computer to execute a quantum circuit including a first subcircuit, the quantum circuit being such that, among first qubits having a predetermined attribute included in a plurality of qubits on which gate operations are performed, a predetermined number of first qubits are in a state $|1\rangle$ before a gate operation specified by the first subcircuit. The computer acquires, from the quantum computer, a measurement result indicating a state of each of the plurality of qubits after the gate operations specified by the quantum circuit. The computer calculates, based on the states of the first qubits indicated by the measurement result, the number of first qubits that are in the state $|1\rangle$ after the gate

operation specified by the first subcircuit. Then, the computer discards the measurement result if the number of first qubits that are in the state $|1\rangle$ after the gate operation specified by the first subcircuit is different from the predetermined number.

Advantageous Effects of Invention

According to one aspect, it is possible to mitigate the impact of errors on the computation result.

The foregoing and other objects, features, and advantages of the present disclosure will become apparent from the following description of preferred embodiments, when read together with the accompany drawings.

Brief Description of Drawings

[FIG. 1] FIG. 1 illustrates an example of an information processing method according to a first embodiment.
[FIG. 2] FIG. 2 illustrates an example of a system configuration according to a second embodiment.
[FIG. 3] FIG. 3 illustrates an example of hardware of devices forming a quantum computing system.
[FIG. 4] FIG. 4 is a block diagram illustrating an example of functions of a classical computer for a quantum chemical calculation using VQE.
[FIG. 5] FIG. 5 illustrates an example of a quantum chemical calculation using VQE.
[FIG. 6] FIG. 6 illustrates an example of a parity check.
[FIG. 7] FIG. 7 illustrates an example of a property of a quantum circuit for VQE.
[FIG. 8] FIG. 8 is a flowchart illustrating an example procedure for VQE computation.
[FIG. 9] FIG. 9 is a flowchart illustrating an example procedure for Hamiltonian computation.
[FIG. 10] FIG. 10 illustrates an example of a process of adding a post-selection circuit for an observable of "pattern 1".
[FIG. 11] FIG. 11 illustrates an example of a process of adding a post-selection circuit for an observable of "pattern 2".
[FIG. 12] FIG. 12 illustrates an example of a process of adding a post-selection circuit for an observable of "pattern 3".
[FIG. 13] FIG. 13 is a flowchart illustrating an example procedure for quantum circuit generation.
[FIG. 14] FIG. 14 illustrates an example of a parity check for an observable of "pattern 1".
[FIG. 15] FIG. 15 illustrates an example of a parity check for an observable of "pattern 2".
[FIG. 16] FIG. 16 illustrates an example of a parity check for an observable of "pattern 3".
[FIG. 17] FIG. 17 illustrates an example of setting information for a VQE computation (first example).
[FIG. 18] FIG. 18 illustrates an example of a parity check for a measurement result of "group 1" in the VQE computation (first example).
[FIG. 19] FIG. 19 illustrates an example of a parity check for a measurement result of "group 2" in the VQE computation (first example).
[FIG. 20] FIG. 20 illustrates an example of a parity check for a measurement result of "group 3" in the VQE computation (first example).
[FIG. 21] FIG. 21 illustrates an example of a parity check for a measurement result of "group 4" in the VQE computation (first example).
[FIG. 22] FIG. 22 illustrates an example of setting information for a VQE computation (second example).
[FIG. 23] FIG. 23 illustrates an example of a parity check for a measurement result of "group 1" in the VQE computation (second example).
[FIG. 24] FIG. 24 illustrates an example of a parity check for a measurement result of "group 2" in the VQE computation (second example).

Description of Embodiments

Hereinafter, embodiments will be described with reference to the drawings. A plurality of embodiments may be combined unless they exclude each other.

[First Embodiment]

A first embodiment relates to an information processing method capable of mitigating the impact of errors on the computation result during computation performed by a quantum computer.

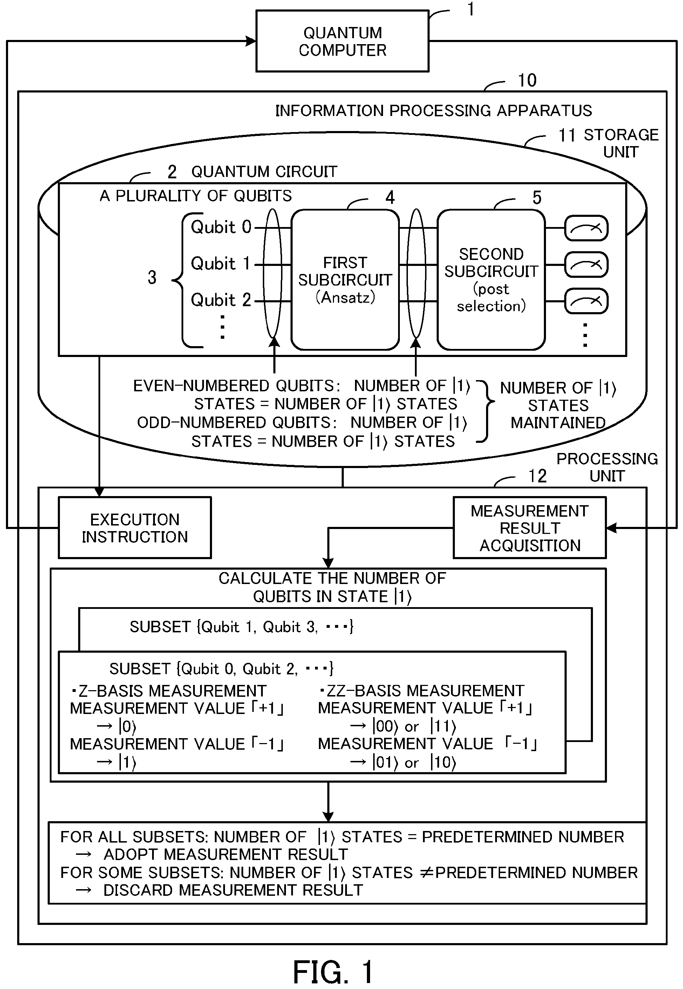

FIG. 1 illustrates an example of the information processing method according to the first embodiment. FIG. 1 illustrates an information processing apparatus 10 that performs the information processing method for mitigating the impact of errors on the computation result. The information processing apparatus 10 is able to implement the information processing method for mitigating the impact of errors on the computation result by executing, for example, a predetermined information processing program.

The information processing apparatus 10 includes a storage unit 11 and a processing unit 12. The storage unit 11 is, for example, a memory or a storage device included in the information processing apparatus 10. The processing unit 12 is, for example, a processor or an arithmetic circuit included in the information processing apparatus 10.

The storage unit 11 stores a quantum circuit 2. The quantum circuit 2 includes, for example, a first subcircuit 4 and a second subcircuit 5. In the quantum circuit 2, among first qubits having a predetermined attribute included in a plurality of qubits 3, a predetermined number of first qubits are in the state $|1\rangle$ before the gate operations specified by the first subcircuit 4. The first subcircuit 4 performs a series of gate operations such as to maintain the number of first qubits in the state $|1\rangle$ before and after the gate operations specified by the first subcircuit 4, except when an error occurs.

The quantum circuit 2 is, for example, a quantum circuit indicating gate operations for computing a Hamiltonian in VQE. The first subcircuit 4 is, for example, an Ansatz circuit representing a wavefunction. The first qubits are, for example, elements of a predetermined qubit group in which, if no error occurs, the number of qubits in the state $|1\rangle$ is maintained before and after the gate operations specified by the first subcircuit 4. The second subcircuit 5 is a quantum circuit that performs gate operations for obtaining the value of an observable and detecting an error simultaneously.

In the case where the predetermined attribute includes a first attribute and a second attribute, the first qubits are classified into first qubits having the first attribute and first qubits having the second attribute. For example, the processing unit 12 sets a qubit indicating whether a spin-up electron is present in a molecular orbital of a molecule as a first qubit. In addition, the processing unit 12 sets a qubit indicating whether a spin-down electron is present in a molecular orbital of the molecule as a second qubit.

In the qubit arrangement of the quantum circuit 2, the state of each even-numbered qubit may indicate the presence or absence of a spin-up electron, and the state of each odd-numbered qubit may indicate the presence or absence of a spin-down electron. In this case, the processing unit 12 may set each even-numbered qubit in the qubit arrangement indicated by the electronic circuit 2, as a first qubit. The processing unit 12 may set each odd-numbered qubit as a first qubit. In the qubit arrangement indicated by the electronic circuit 2, the processing unit 12 may set each even-numbered qubit as a first qubit having the first attribute and set each odd-numbered qubit as a first qubit having the second attribute.

When the processing unit 12 detects that an error has occurred during the execution of the quantum circuit 2 by the quantum computer 1, the processing unit 12 discards the measurement result of the plurality of qubits 3 obtained as a result of the execution, thereby preventing the error from affecting the subsequent computation that will use the measurement result. For example, the processing unit 12 performs the following process.

The processing unit 12 instructs the quantum computer 1 to execute the quantum circuit 2. Then, the processing unit 12 acquires, from the quantum computer 1, a measurement result indicating the state of each of the plurality of qubits 3 after the gate operations specified by the quantum circuit 2.

The processing unit 12 calculates, based on the states of the first qubits indicated by the measurement result, the number of first qubits that are in the state $|1\rangle$ after the gate operations specified by the first subcircuit 4 included in the quantum circuit 2. Then, if the number of first qubits that are in the state $|1\rangle$ after the gate operations specified by the first subcircuit 4 is different from the predetermined number, the processing unit 12 discards the measurement result. If the number of first qubits that are in the state $|1\rangle$ after the gate operations specified by the first subcircuit 4 is equal to the predetermined number, the processing unit 12 adopts the measurement result.

Thus, if the number of first qubits in the state $|1\rangle$ is not maintained before and after the gate operations specified by the first subcircuit 4, the processing unit 12 determines that an error has occurred during the gate operations or measurement of the quantum circuit 2, and discards the measurement result obtained this time. As a result, the subsequent computation (for example, the Hamiltonian computation) using the measurement result containing the error is prevented from being performed. Consequently, the error is prevented from affecting the computation result, and thus the computational accuracy is improved.

Moreover, the number of first qubits that are in the state $|1\rangle$ after the gate operations specified by the first subcircuit 4 included in the quantum circuit 2 is calculated based on the states of the first qubits. That is, the number of first qubits in the state $|1\rangle$ is calculated without using ancilla qubits or the like. This prevents an increase in the number of qubits that are used for mitigating the impact of errors on the computation result.

In the case where the first qubits are classified into the first qubits having the first attribute and the first qubits having the second attribute, the processing unit 12 compares, for each attribute, the numbers of first qubits that are in the state $|1\rangle$ before and after the gate operations specified by the first subcircuit 4. Assume, for example, that the processing unit 12 sets, as a first value, the number of first qubits having the first attribute that are in the state $|1\rangle$ before the gate operations specified by the first subcircuit 4. The processing unit 12 sets, as a second value, the number of first qubits having the second attribute that are in the state $|1\rangle$ before the gate operations specified by the first subcircuit 4.

The processing unit 12 calculates a third value indicating the number of first qubits having the first attribute that are in the state $|1\rangle$ after the gate operations specified by the first subcircuit 4. The processing unit 12 also calculates a fourth value indicating the number of first qubits having the second attribute that are in the state $|1\rangle$ after the gate operations specified by the first subcircuit 4. If the third value is different from the first value or if the fourth value is different from the second value, the processing unit 12 discards the measurement result.

As described above, in the case where there are a plurality of attributes, such as the first attribute and the second attribute, if even for any one attribute, the number of first qubits in the state $|1\rangle$ is not maintained before and after the gate operations specified by the first subcircuit 4, the measurement result is discarded. On the other hand, if for all attributes, the number of first qubits in the state $|1\rangle$ is maintained before and after the gate operations specified by the first subcircuit 4, the measurement result is adopted. By doing so, it becomes possible to detect the occurrence of an error with a high probability, and thus to mitigate the impact of the error on the overall computation.

Further, by adding the appropriate second subcircuit 5, the processing unit 12 is able to acquire the value of an observable and detect an error simultaneously, based on a measurement result. For example, the processing unit 12 generates the quantum circuit 2 including the second subcircuit 5 as follows.

The processing unit 12 identifies, among the first qubits, a second qubit and a third qubit whose states are to be measured in the X basis (Hadamard basis) or the Y basis (circle basis) after the execution of the first subcircuit 4. The processing unit 12 generates the second subcircuit 5 based on the identified second qubit and third qubit. The second subcircuit 5 includes gate operations that transform the state of the second qubit into a state representing the tensor product of the measurement-basis state of the second qubit and the measurement-basis state of the third state. The second subcircuit 5 also includes gate operations that transform the state of the third qubit into a state representing the tensor product of the Z-basis (measurement basis) state of the second qubit and the Z-basis state of the third qubit.

The measurement of a qubit sate in the X basis may be referred to as an X-basis measurement. The measurement of a qubit state in the Y basis may be referred to as a Y-basis measurement. The measurement of a qubit state in the Z-basis may be referred to as a Z-basis measurement.

Then, the processing unit 12 generates the quantum circuit 2 by adding the second subcircuit 5 after the first subcircuit 4 corresponding to the problem to be solved. With the generated quantum circuit 2, it becomes possible to measure the value of the observable to be measured and values indicating whether the first qubits are in the state $|1\rangle$ after the execution of the first subcircuit 4, simultaneously.

For example, among the first qubits, qubits that are to be measured in the Z basis are measured directly in the Z basis. For example, if the measurement value of a first qubit is "+1", the processing unit 12 determines that the Z-basis state of the first qubit is $|0\rangle$. If the measurement value of a first qubit is "-1", the processing unit 12 determines that the Z-basis state of the first qubit is $|1\rangle$.

The processing unit 12 determines the number of qubits in the state $|1\rangle$ among the second qubit and the third qubit, based on the tensor product of the Z-basis state of the second qubit and the Z-basis state of the third qubit. For example, in the case where the measurement result of the state of the third qubit is "+1", the processing unit 12 determines that both the second qubit and the third qubit after the execution of the first subcircuit 4 are in the state $|1\rangle$ or both are 10). In the case where the measurement result of the state of the third qubit is "-1", the processing unit 12 determines that one of the second qubit and the third qubit after the execution of the first subcircuit 4 is in the state $|1\rangle$ and the other is in the state 10).

Let N (N is an integer greater than or equal to 0) denote the number (predetermined number) of first qubits that are in the state $|1\rangle$ before the gate operations specified by the first subcircuit 4. The processing unit 12 discards the measurement result if none of the following three conditions is satisfied.

The first condition is that, among fourth qubits, which are first qubits other than the second qubit and the third qubit, the number of fourth qubits in the state $|1\rangle$ is N, and the measurement result of the state of the third qubit is "+1". The second condition is that the number of fourth qubits in the state $|1\rangle$ is N - 1 and the measurement result of the state of the third qubit is "-1". The third condition is that the number of fourth qubits in the state $|1\rangle$ is N - 2 and the measurement result of the state of the third qubit is "+1".

In the manner described above, measurement results that have been confirmed to contain errors are discarded without fail. As a result, the errors are prevented from affecting the computation result.

[Second Embodiment]

A second embodiment relates to a quantum computer system capable of mitigating the impact of errors on the computation result of a quantum computation during a quantum chemical calculation using VQE on a quantum computer.

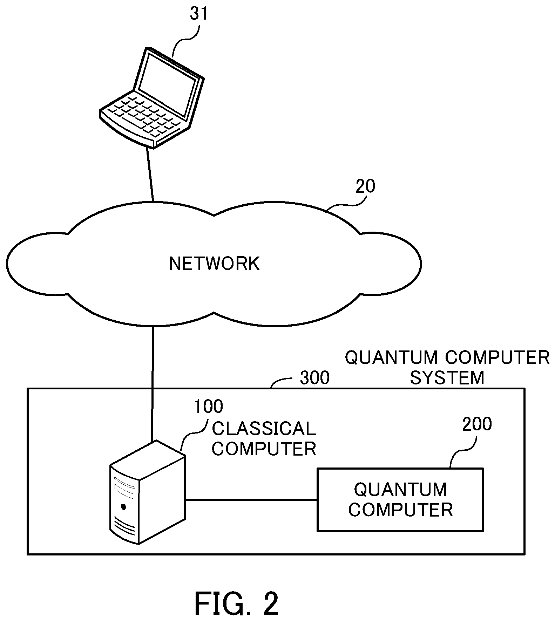

FIG. 2 illustrates an example of a system configuration according to the second embodiment. In the second embodiment, a quantum computer system 300 and a terminal device 31 are connected via a network 20. The terminal device 31 transmits a quantum computation request to the quantum computer system 300 in accordance with user operation.

The quantum computer system 300 includes a classical computer 100 and a quantum computer 200. The classical computer 100 and the quantum computer 200 are connected by a communication interface. The classical computer 100 is a von Neumann computer and performs processing such as generation of a quantum circuit and optimization of parameters used for the computation of the quantum circuit. The quantum computer 200 is a computer that performs a quantum chemical calculation by performing the operations of quantum gates on qubits. The quantum computer 200 performs the quantum chemical calculation using the VQE algorithm according to the quantum circuit and parameters generated by the classical computer 100.

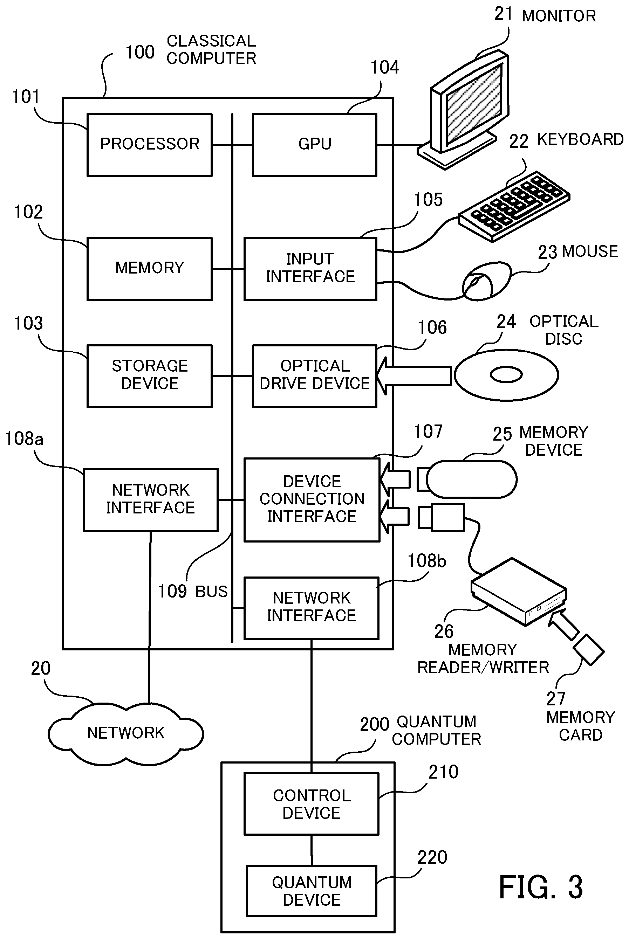

FIG. 3 illustrates an example of hardware of devices forming a quantum computing system. The classical computer 100 is entirely controlled by a processor 101. A memory 102 and a plurality of peripheral devices are connected to the processor 101 via a bus 109. The processor 101 may be a multiprocessor. The processor 101 is, for example, a central processing unit (CPU), a micro processing unit (MPU), or a digital signal processor (DSP). At least a part of the functions implemented by the processor 101 executing a program may be implemented by an electronic circuit such as an application specific integrated circuit (ASIC) or a programmable logic device (PLD).

The memory 102 is used as a main storage device of the classical computer 100. The memory 102 temporarily stores at least part of operating system (OS) programs and application programs to be executed by the processor 101. The memory 102 also stores various data to be used by the processor 101 during its operation. As the memory 102, for example, a volatile semiconductor storage device such as a random access memory (RAM) is used.

The peripheral devices connected to the bus 109 include a storage device 103, a graphics processing unit (GPU) 104, an input interface 105, an optical drive device 106, a device connection interface 107, and network interfaces 108a and 108b.

The storage device 103 electrically or magnetically writes and reads data to and from a built-in recording medium. The storage device 103 is used as an auxiliary storage device of the classical computer 100. The storage device 103 stores OS programs, application programs, and various data. As the storage device 103, for example, a hard disk drive (HDD) or a solid state drive (SSD) may be used.

The GPU 104 is an arithmetic device that performs image processing. The GPU 104 is an example of a graphic controller. A monitor 21 is connected to the GPU 104. The GPU 104 displays images on the screen of the monitor 21 in accordance with instructions from the processor 101. Examples of the monitor 21 include a display device using organic electro luminescence (EL) and a liquid crystal display device.

A keyboard 22 and a mouse 23 are connected to the input interface 105. The input interface 105 transmits signals sent from the keyboard 22 and the mouse 23 to the processor 101. The mouse 23 is an example of a pointing device, and other pointing devices may be used. Examples of other pointing devices include a touch panel, a tablet, a touch pad, and a track ball.

The optical drive device 106 reads data recorded on the optical disc 24 or writes data to the optical disc 24 using laser light or the like. The optical disc 24 is a portable recording medium on which data is recorded so as to be readable by reflection of light. The optical disc 24 may be a digital versatile disc (DVD), a DVD-RAM, a compact disc read only memory (CD-ROM), a CD-recordable (CD-R)/CD-rewritable (CD-RW), or the like.

The device connection interface 107 is a communication interface for connecting peripheral devices to the classical computer 100. For example, a memory device 25 and a memory reader/writer 26 are connected to the device connection interface 107. The memory device 25 is a recording medium having a function of communicating with the device connection interface 107. The memory reader/writer 26 is a device that writes data to a memory card 27 or reads data from the memory card 27. The memory card 27 is a card-type recording medium.

The network interface 108a is connected to the network 20. The network interface 108a transmits and receives data to and from other computers or communication devices via the network 20. The network interface 108a is a wired communication interface connected to a wired communication device such as a switch or a router via a cable. Alternatively, the network interface 108a may be a wireless communication interface communicatively connected to a wireless communication device such as a base station or an access point by radio waves.

The network interface 108b is an interface for connecting to the quantum computer 200. The processor 101 transmits a quantum circuit to the quantum computer 200 via the network interface 108b, and causes the quantum computer 200 to execute quantum computation. The processor 101 acquires the result of the quantum computation via the network interface 108b.

The classical computer 100 is able to implement the processing functions of the second embodiment with the above-described hardware. The information processing apparatus 10 described in the first embodiment may also be implemented with hardware similar to that of the classical computer 100 illustrated in FIG. 3.

The classical computer 100 implements the processing functions of the second embodiment by executing a program recorded on a computer-readable recording medium, for example. The program describing the processing contents to be executed by the classical computer 100 may be recorded on various recording media. For example, a program to be executed by the classical computer 100 may be stored in the storage device 103. The processor 101 loads at least a part of the program from the storage device 103 into the memory 102 and executes the program. The program to be executed by the classical computer 100 may be recorded on a portable recording medium such as the optical disc 24, the memory device 25, or the memory card 27. The program stored on the portable recording medium becomes executable after being installed in the storage device 103 under the control of the processor 101, for example. Alternatively, the processor 101 may execute the program while reading the program directly from the portable recording medium.

The quantum computer 200 includes a control device 210 and a quantum device 220. The control device 210 performs gate operations on qubits inside the quantum device according to a quantum circuit. The quantum device 220 has a plurality of qubits. The quantum device 220 is, for example, a quantum processing unit (QPU).

In the quantum computer system 300, the classical computer 100 and the quantum computer 200 operate in cooperation with each other to perform a quantum chemical calculation using VQE.

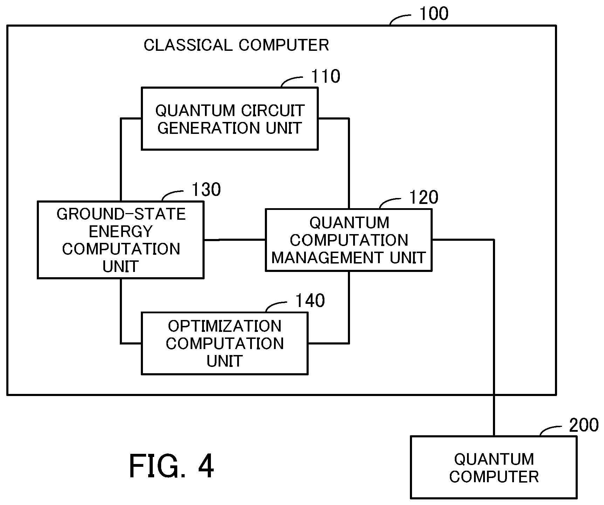

FIG. 4 is a block diagram illustrating an example of functions of the classical computer for a quantum chemical calculation using VQE. The classical computer 100 includes a quantum circuit generation unit 110, a quantum computation management unit 120, a ground-state energy computation unit 130, and an optimization computation unit 140.

The quantum circuit generation unit 110 generates a quantum circuit for computing the energy of a quantum many-body system such as a molecule. For example, the quantum circuit generation unit 110 generates a quantum circuit using a VQE algorithm. The quantum circuit generation unit 110 transmits the generated quantum circuit to the quantum computation management unit 120.

The quantum computation management unit 120 instructs the quantum computer 200 to compute observables based on the generated quantum circuit and the states of qubits for parity check. For example, the quantum computation management unit 120 sets a plurality of parameters θ related to the gate operations of the quantum gates in the quantum circuit. Before the quantum computation for the first time, the quantum computation management unit 120 sets the plurality of parameters θ to initial values. The quantum computation management unit 120 acquires, from the quantum computer 200, the computation result of the observables based on the quantum circuit parameterized by the plurality of parameters θ and information indicating the states of the parity check qubits. The quantum computation management unit 120 instructs the quantum computer 200 to compute the observables and the states of the parity check qubits until a predetermined number of shots (the number of valid observable computations) is reached.

The ground-state energy computation unit 130 performs the parity check and computes the ground-state energy, based on the computation result of the observables and the information indicating the states of the parity check qubits. For example, the ground-state energy computation unit 130 determines based on the information indicating the states of the parity check qubits whether an error has occurred, and if an error has occurred, discards the measurement values of the observables obtained simultaneously. The ground-state energy computation unit 130 computes the ground-state energy based on the values of the observables that are valid without being discarded among the values of the observables repeatedly measured. When the ground-state energy has converged, the ground-state energy computation unit 130 outputs the ground-state energy as a computation result. If the energy has not converged, the ground-state energy computation unit 130 instructs the optimization computation unit 140 to optimize the parameters.

Each time the quantum computation is performed, the optimization computation unit 140 updates all or some of the values of the plurality of parameters θ in a direction that decreases the energy value. When the optimization computation is completed, the optimization computation unit 140 notifies the quantum computation management unit 120 of the updated values of the plurality of parameters θ.

The function of each element in the classical computer 100 illustrated in FIG. 4 may be implemented by, for example, causing a computer to execute a program module corresponding to that element.

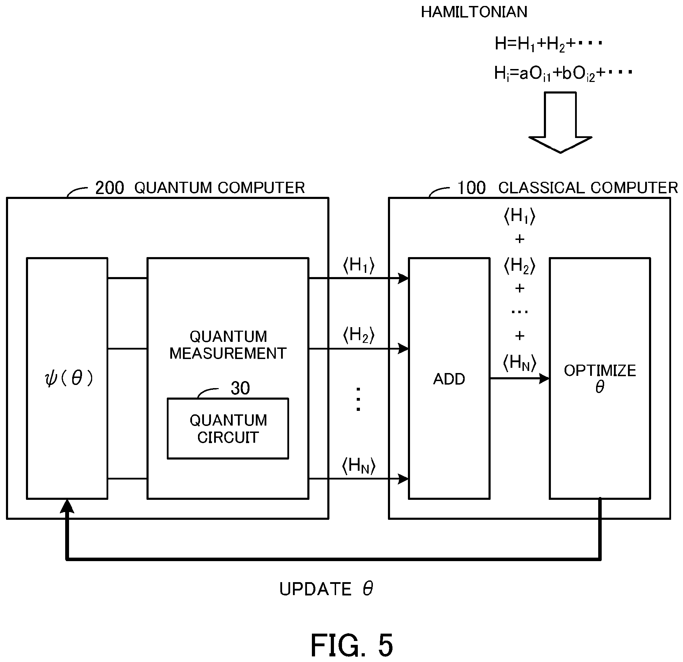

FIG. 5 illustrates an example of a quantum chemical calculation using VQE. In the quantum chemical calculation using VQE, the quantum computer 200 performs quantum measurement based on the initial values of parameters θ (a set of variables in a circuit corresponding to electron excitations). That is, the quantum computer 200 computes the values of a plurality of decomposed Hamiltonians ($H_1$, $H_2$, ..., $H_N$) (N is a natural number) according to the quantum circuit. A quantum circuit 30 used for the quantum measurement includes an Ansatz circuit. The plurality of computed Hamiltonians are added by the classical computer 100 to obtain an expectation value of the energy of the entire system. Then, the optimization computation unit 140 in the classical computer 100 optimizes the parameters θ based on the expectation value of the energy. That is, the optimization computation unit 140 updates the parameters θ in a direction that decreases the expectation value of the energy. When the parameters θ are updated, the quantum computer 200 computes the Hamiltonians based on the updated parameters θ again.

The computation of the Hamiltonians and the update of the parameters θ are iteratively performed until the ground-state energy is obtained.

An energy E that is obtained in the computation of the ground energy of a molecule using VQE is expressed by the following Expression (1).

$$E = \langle H \rangle = \frac{\langle \varphi(\vec{\theta})|H|\varphi(\vec{\theta})\rangle}{\varphi(\vec{\theta})|\varphi(\vec{\theta})} \qquad (1)$$

Here, φ represents a quantum state. H represents a Hamiltonian. The Hamiltonian is a function of the intermolecular distance R. θ is a rotation angle used as an optimization variable. The ground-state energy is the lowest energy. Therefore, among the energies obtained by repeatedly calculating Equation (1) while changing the rotation angle θ, the lowest energy is taken as the ground-state energy $E_0$. An expression representing the ground-state energy $E_0$ is as follows.

$$\frac{\langle\varphi(\vec{\theta})|H|\varphi(\vec{\theta})\rangle}{\varphi(\vec{\theta})|\varphi(\vec{\theta})} \geq E_0 \qquad\qquad (2)$$

In the actual computation, the Hamiltonian is decomposed into a sum form ($H = H_1 + H_2 + ...$), and each of the decomposed Hamiltonians is calculated. That is, the quantum circuit generation unit 110 generates a quantum circuit for performing quantum chemical calculation using VQE for each decomposed Hamiltonian.

Each decomposed Hamiltonian $H_i$ (i = 1, 2, ...) is the sum "$H_i = aO_{i1} + bO_{i2} + ...$" of real-number multiples of observables that are measurable in a single quantum circuit (a and b are real numbers). $O_{i1}, O_{i2}, ...$ are observables of the i-th Hamiltonian. Observables are represented like $Z_0$ and $X_0Z_1X_2$. $Z_0$ represents the Z-basis measurement result of the zeroth qubit. $X_0Z_1X_2$ is the tensor product of the X-basis measurement result of the zeroth qubit, the Z-basis measurement result of the first qubit, and the X-basis measurement result of the second qubit.

The quantum circuit constituting VQE includes a circuit called Ansatz. Ansatz accounts for most of the VQE quantum circuit. Ansatz is a quantum circuit that represents a wavefunction $\psi(\theta)$ parameterized by variables.

Here, the impact of an error in VQE computation performed using the quantum computer 200 will be described. Errors that affect computation results include thermal relaxation errors, gate operation errors, measurement errors (readout errors), and others. A thermal relaxation error is an error in which a quantum state decays over time and returns to the initial state 10). A gate operation error is an error that occurs because a gate operation does not operate with ideal accuracy and that causes a deviation from an intended operation on the state of a qubit. A readout error is an error that occurs during measurement after gate operations, and this error may cause the $|0\rangle$ state to be misread as $|1\rangle$ or the $|1\rangle$ state to be misread as 10).

Due to the impact of such errors, incorrect computation results may be obtained in the quantum computation. This impact is fatal in the computation on a NISQ device without error correction functionality. In order to mitigate the impact of errors, for example, the technique described in the above-mentioned non-patent literature NPL1 may be applied. However, the technique disclosed in the literature uses additional qubits called ancilla qubits. In some cases, it is not possible to prepare qubits for ancilla qubits in the NISQ device. Therefore, it is desirable to mitigate the impact of errors without using ancilla qubits.

In view of the above, the quantum computer system 300 achieves the mitigation of the impact of errors without using ancilla qubits. For example, for quantum computations (for example, certain quantum chemical calculations) that impose specific conditions, the quantum computer system 300 measures observables simultaneously with checking the quantum number. The quantum computer system 300 then discards measurement results that have been confirmed to be affected by errors. By doing so, a computation result with mitigated error impact is obtained.

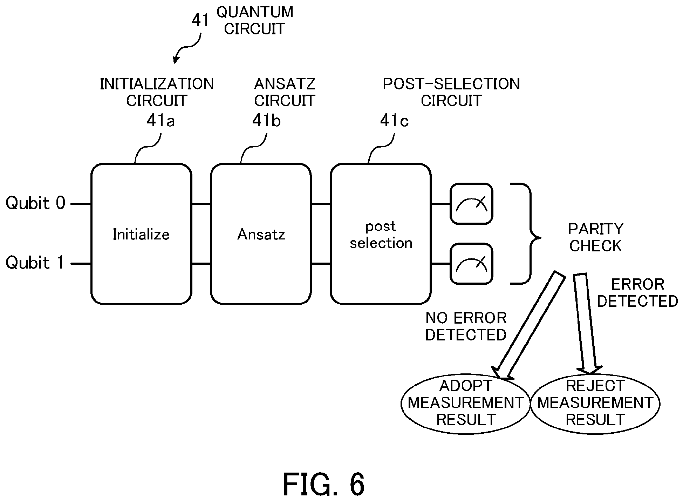

FIG. 6 illustrates an example of a parity check. A quantum circuit 41 for VQE that is subject to a parity check includes, for example, an initialization circuit 41a, an Ansatz circuit 41b, and a post-selection circuit 41c. The initialization circuit 41a is a circuit that performs gate operations for generating the initial states of qubits. The Ansatz circuit 41b is a circuit that represents a wavefunction. The post-selection circuit 41c is a circuit that performs gate operations for measuring the states of qubits used for the parity check and observables simultaneously.

As a result of quantum computation based on the quantum circuit 41, the states of the parity check qubits and the observables are measured. The classical computer 100 performs the parity check based on the states of predetermined qubits, and if no error is detected through the parity check, the measurement result of the observables is adopted. If an error is detected through the parity check, the measurement result is rejected. The rejected measurement result is discarded.

The parity check utilizes the property that, under Ansatz conditions on a spin singlet (where the total spin is zero) and the conservation of spin amount, quantum numbers for spin-up electrons and for spin-down electrons remain unchanged from initialization through the execution of the Ansatz.

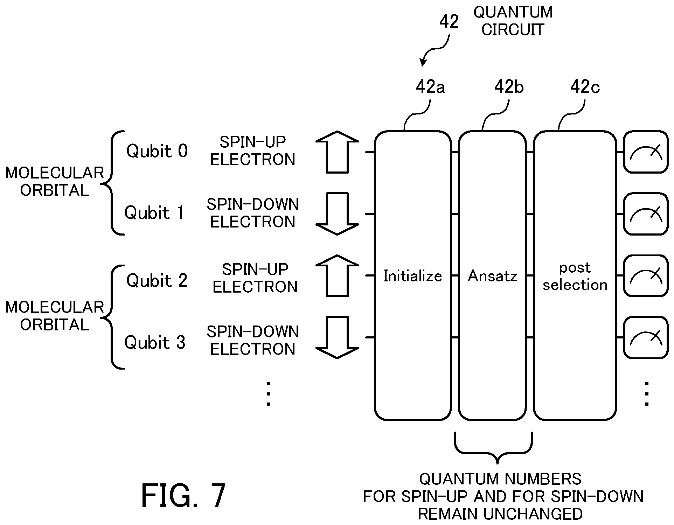

FIG. 7 illustrates an example of a property of a quantum circuit for VQE. A molecule has a plurality of molecular orbitals. Each molecular orbital is able to contain two electrons with different spin orientations. Electrons with one spin orientation are referred to as spin-up electrons, and electrons with the other spin orientation are referred to as spin-down electrons.

In VQE, one qubit is used to indicate whether a spin-up electron is in a certain molecular orbital. In addition, another qubit is used to indicate whether a spin-down electron is in that molecular orbital. A qubit is in the state "1" to indicate that the corresponding molecular orbital contains a spin electron, and is in the state "0" to indicate that the corresponding molecular orbital does not contain a spin electron.

Adjacent qubits in the quantum circuit 42 are used for each molecular orbital to indicate the presence or absence of a spin-up electron and to indicate the presence or absence of a spin-down electron, respectively. In the example of FIG. 7, spin-up electrons are assigned to even-numbered qubits (even-index qubits), and spin-down electrons are assigned to odd-numbered qubits (odd-index qubits).

Here, the spin amount is conserved in the initialization circuit 42a and the Ansatz circuit 42b. In other words, when all the qubits are measured in the Z basis, the number of qubits measured in the state $|1\rangle$ among the even-index qubits remains unchanged after the gate operations specified by the Ansatz circuit 42b. Similarly, the number of qubits measured in the state $|1\rangle$ among the odd-index qubits remains unchanged after the gate operations specified by the Ansatz circuit 42b.

Therefore, the presence or absence of an error is determined by checking the numbers of $|1\rangle$ states measured in the Z basis in the odd-index qubit group and the even-index qubit group. That is, if the number of $|1\rangle$ states input to the quantum circuit 42 is not equal to the number of $|1\rangle$ states after the execution of the initialization circuit 42a and the Ansatz circuit 42b in either the odd-index qubit group or the even-index qubit group, it is determined that an error has occurred.

Note, however, that in VQE, the computation of the expectation value of an observable may involve an X-basis measurement or a Y-basis measurement. In this case, the quantum computer system 300 groups two or more odd-index qubits or two or more even-index qubits, and performs measurements (for example, XX- or YY-basis measurements) for computing the expectation value simultaneously with ZZ-basis measurement. That is, a post-selection circuit 42c is added for achieving such simultaneous measurements.

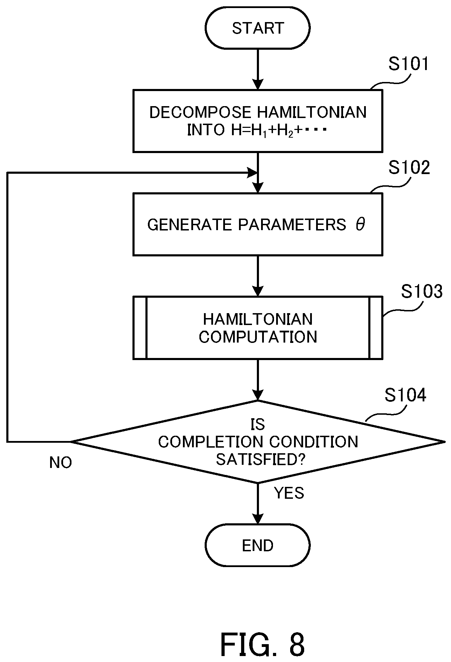

FIG. 8 is a flowchart illustrating an example procedure for VQE computation. Hereinafter, the process illustrated in FIG. 8 will be described in order of step numbers.

[Step S101] The quantum computation management unit 120 decomposes a Hamiltonian H corresponding to a problem to be solved, into "$H_1 + H_2 +, ...$".

[Step S102] The optimization computation unit 140 generates parameters $\theta$. For example, the optimization computation unit 140 updates the parameters $\theta$ from preset initial values in a direction that decreases the value of the Hamiltonian, each time steps S102 and S103 are repeated.

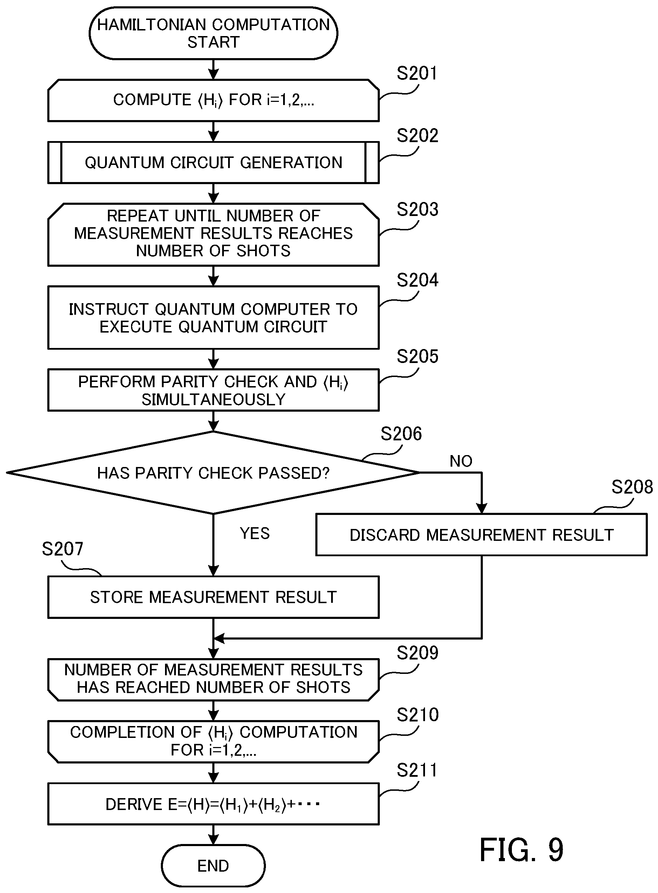

[Step S103] The ground-state energy computation unit 130 computes the Hamiltonian in cooperation with the quantum circuit generation unit 110 and the quantum computation management unit 120. Details of the Hamiltonian computation will be described later (see FIG. 9).

[Step S104] The quantum computation management unit 120 determines whether a completion condition of the VQE computation is satisfied. The completion condition is, for example, that the absolute value of the difference between the previous computation result and the current computation result of the Hamiltonian is less than or equal to a predetermined value. If the completion condition is satisfied, the quantum computation management unit 120 completes the VQE computation. If the completion condition is not satisfied, the process proceeds to step S102.

In this way, the Hamiltonian is iteratively computed while the parameters $\theta$ are updated, until the completion condition is satisfied. The Hamiltonian obtained when the completion condition is satisfied is taken as the ground-state energy.

FIG. 9 is a flowchart illustrating an example procedure for Hamiltonian computation. Hereinafter, the process illustrated in FIG. 7 will be described in order of step numbers.

[Step S201] The ground-state energy computation unit 130 executes steps S202 to S209 for each decomposed Hamiltonian $H_i$ (i = 1, 2, ...). As a result, the value of each Hamiltonian $H_i$ is computed.

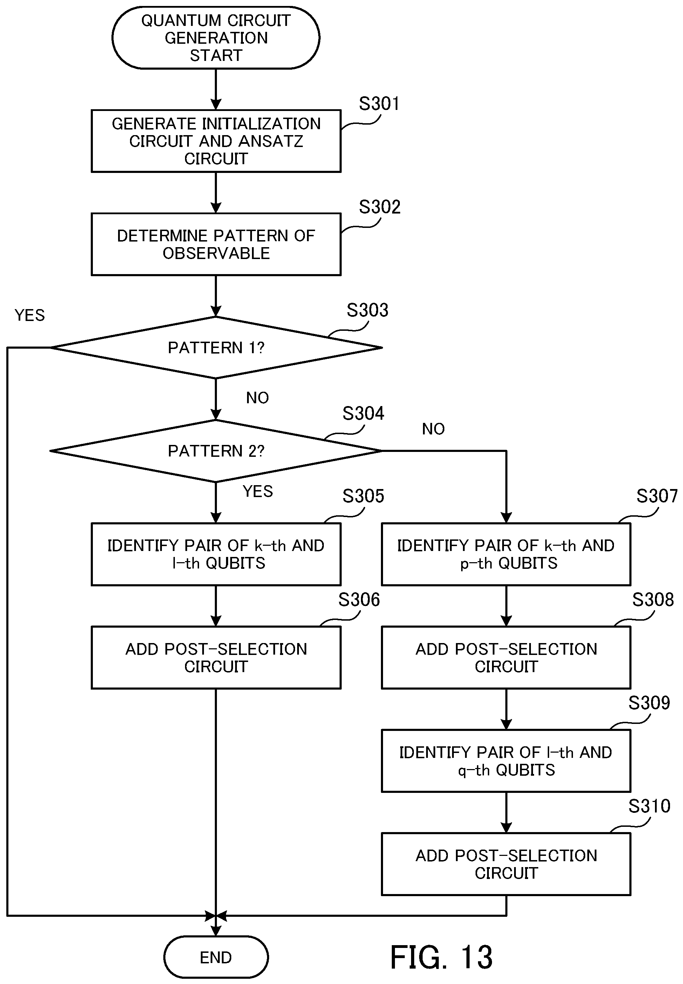

[Step S202] The quantum circuit generation unit 110 generates a quantum circuit for computing the Hamiltonian $H_i$. Details of the quantum circuit generation will be described later (see FIG. 13).

[Step S203] The ground-state energy computation unit 130 repeatedly executes steps S204 to S208 until the number of measurement results reaches a predetermined number of shots.

[Step S204] The ground-state energy computation unit 130 transmits the generated quantum circuit to the quantum computation management unit 120. The quantum computation management unit 120 instructs the quantum computer 200 to execute the quantum computation represented by the quantum circuit. Then, the quantum computer 200 performs the quantum computation according to the quantum circuit. The quantum computer 200 transmits a measurement result, which is a result of the quantum computation, to the quantum computation management unit 120. The quantum computation management unit 120 transmits the received measurement result to the ground-state energy computation unit 130.

[Step S205] The ground-state energy computation unit 130 simultaneously performs a parity check and the computation of the Hamiltonian $\langle H_i \rangle$ based on the measurement result.

[Step S206] The ground-state energy computation unit 130 determines whether the parity check has passed (whether no error is present). If the ground-state energy computation unit 130 determines that the parity check has passed, the process proceeds to step S207. If the ground-state energy computation unit 130 determines as the result of the parity check that an error is present, the process proceeds to step S208.

[Step S207] The ground-state energy computation unit 130 stores the measurement result (i.e., the value of the

Hamiltonian $\langle H_i \rangle$). Thereafter, the ground-state energy computation unit 130 advances the process to step S209.

[Step S208] The ground-state energy computation unit 130 discards the measurement result.

[Step S209] If the number of stored measurement results has reached the predetermined number of shots, the ground-state energy computation unit 130 advances the process to step S210. If the number of stored measurement results has not reached the predetermined number of shots, steps S204 to S208 are repeated.

[Step S210] When the computation of each decomposed Hamiltonian $H_i$ (i = 1, 2, ...) is completed, the ground-state energy computation unit 130 advances the process to step S211. If the computation has not yet been completed for any of the decomposed Hamiltonians $H_i$ (i = 1, 2, ...), steps S202 to S209 are executed for that Hamiltonian.

[Step S211] The ground-state energy computation unit 130 derives the energy E (E = (H) = $\langle H_1 \rangle \langle H_2 \rangle$, ...) represented by the entire Hamiltonian (H).

In this manner, the energy E is computed with using only the measurement results that have been determined to contain no errors through the parity check. Since the energy E is computed without using measurement results that have been confirmed to contain errors, the accuracy of the computation is improved.

Next, the quantum circuit generation will be specifically described. Post-selection circuits corresponding to observables to be computed are added to the generated quantum circuit.

For example, in the case where the Hamiltonian is to be computed, which is generated under the Jordan-Wigner transformation, is decomposed into observables, the observables are classified into the following three patterns.

[Pattern 1]
An observable formed of only a tensor product of Z and I (I is an identity operator).
[Pattern 2]

.

$$(X \ or \ Y)_k Z_{k+1} ... Z_{l-1} (X \ or \ Y)_l$$

.

$$Z_p (X \ or \ Y)_k Z_{k+1} ... Z_{l-1} (X \ or \ Y)_l$$

.

$$(X \ or \ Y)_k Z_{k+1} ... Z_{l-1} (X \ or \ Y)_l Z_p$$

[Pattern 3]
$(X \ or \ Y)_k Z_{k+1}...Z_{l-1}(X \ or \ Y)_l(X \ or \ Y)_p Z_{p+1}...Z_{q-1}(X \ or \ Y)_q$

Each of k and 1 is an integer greater than or equal to 0 indicating a qubit number in the quantum circuit. In "pattern 2", the notation "$Z_{k+1}...Z_{l-1}$" is a sequence of an odd number of Z's. That is, in "pattern 2", if k is an even number, 1 is also an even number. If k is an odd number, 1 is also an odd number.

In "pattern 3", each of the notations "$Z_{k+1}...Z_{l-1}$" and "$Z_{p+1}...Z_{q-1}$" is a sequence of an even number of Z's. That is, in "pattern 3", if k is an even number, p is also an even number, and both 1 and p are odd numbers. In "pattern 3", if k is an odd number, p is also an odd number, and both 1 and p are even numbers.

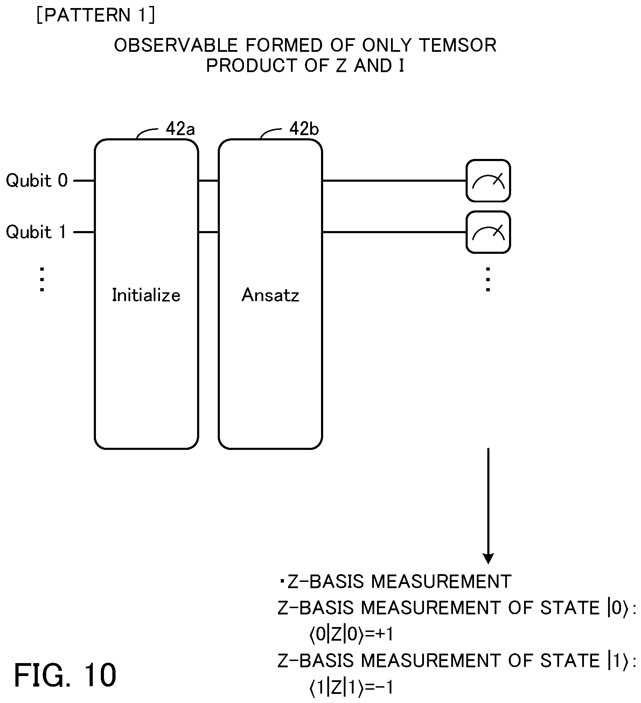

FIG. 10 illustrates an example of a process of adding a post-selection circuit for an observable of "pattern 1". In the case where an observable of "pattern 1" is measured, there is no need to add a post-selection circuit. By performing Z-basis measurements on all qubits after the execution of the Ansatz circuit 42b, the observable is obtained from the measurement result. In addition, the number of $|1\rangle$ states in the even-index qubit group and the number of $|1\rangle$ states in the odd-index qubit group are directly obtained from the measurement result.

For example, the Z-basis measurement on a qubit in the state $|0\rangle$ results in "+1" ("$\langle 0|Z|0\rangle$ = +1"). Likewise, the Z-basis measurement on a qubit in the state $|1\rangle$ results in "-1" ("$\langle 1|Z|1\rangle$ = -1").

If the sum of the measurement results of the even-index qubits is equal to the value obtained from the input state and the sum of the measurement results of the odd-index qubits is equal to the value obtained from the input state, it is determined through the parity check that no error is present. On the other hand, if the sum of the measurement results of the even-index qubits is different from the value obtained from the input state or if the sum of the measurement results of the odd-index qubits is different from the value obtained from the input state, it is determined through the parity check that an error is present.

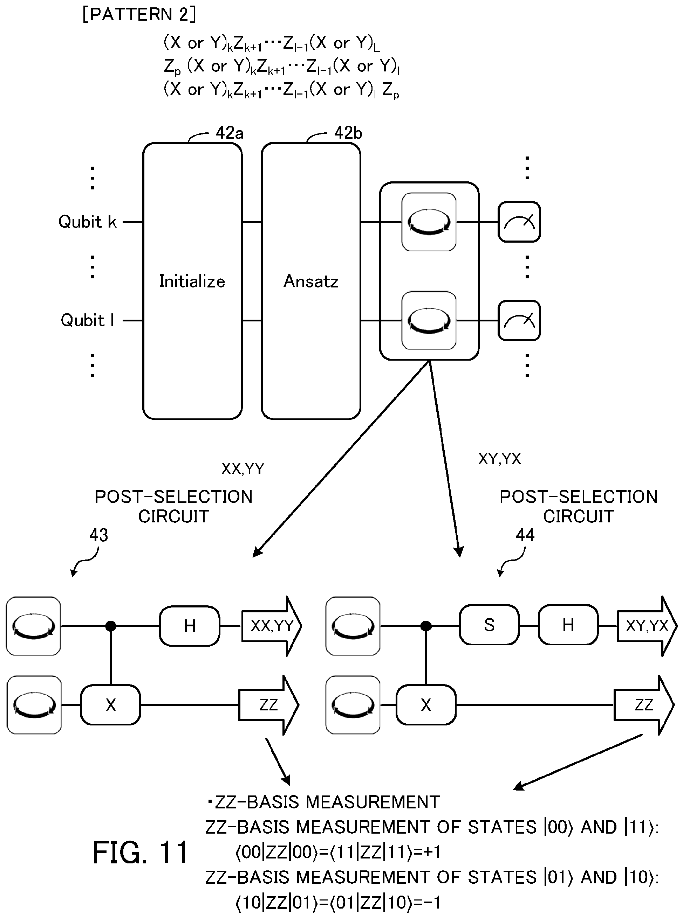

FIG. 11 illustrates an example of a process of adding a post-selection circuit for an observable of "pattern 2". In the case of an observable of "pattern 2", the post-selection circuit differs depending on whether the measurement basis for a qubit pair of the k-th qubit and the l-th qubit is "XX" or "YY", or is "XY" or "YX".

In the case where the measurement basis for the qubit pair is "XX" or "YY", a post-selection circuit 43 is added. In the post-selection circuit 43, a CNOT gate is placed between the k-th qubit and the l-th qubit, and a Hadamard gate is placed on a qubit that serves as the control qubit of the CNOT gate.

In the case where the post-selection circuit 43 is added, the qubit that serves as the control qubit of the CNOT gate is measured in the "XX" basis, and the qubit that serves as the target qubit of the CNOT gate is measured in the "ZZ" basis. The "YY"-basis measurement is derived using the equation "YY = -(XX) (ZZ)", based on the measurement result of the post-selection circuit 43.

In the case where the measurement basis for the qubit pair is "XY" or "YX", a post-selection circuit 44 is added. In the post-selection circuit 44, a CNOT gate is placed between the k-th qubit and the l-th qubit, and a phase shift gate (S gate) and a Hadamard gate are placed on a qubit that serves as the control qubit of the CNOT gate.

In the case where the post-selection circuit 44 is added, the qubit that serves as the control qubit of the CNOT gate is measured in the "XY" basis, and the qubit that serves as the target qubit of the CNOT gate is measured in the "ZZ" basis. The "YX"-basis measurement is derived based on the measurement result of the post-selection circuit 44.

A "ZZ"-basis measurement result indicates whether the number of $|1\rangle$ states in the paired qubits is even or odd. If the qubit pair is in the state 100) or $|11\rangle$ (i.e., an even number of $|1\rangle$ states), the "ZZ"-basis measurement result is "+1" ($\langle 00|ZZ|00\rangle = \langle 11|ZZ|11\rangle = +1$). If the qubit pair is in the state 101) or $|10\rangle$ (i.e., an odd number of $|1\rangle$ states), the "ZZ"-basis measurement result is "-1" ($\langle 10|ZZ|01\rangle = \langle 01|ZZ|10\rangle = -1$).

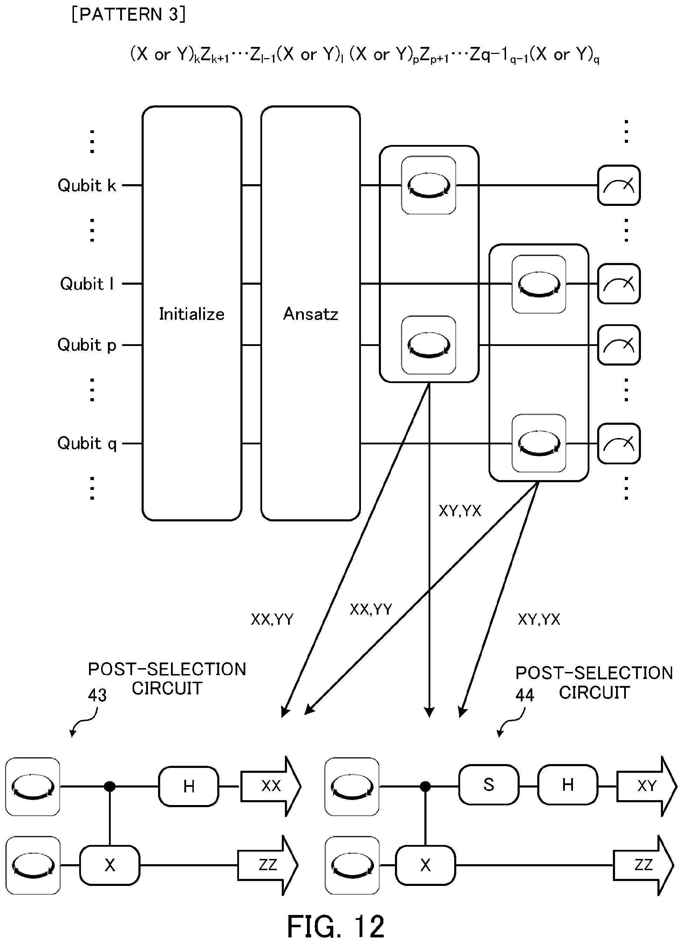

FIG. 12 illustrates an example of a process of adding a post-selection circuit for an observable of "pattern 3". In the case of an observable of "pattern 3", the k-th qubit and the p-th qubit form a qubit pair for which a post-selection circuit is added. In addition, the l-th qubit and the q-th qubit form a qubit pair for which a post-selection circuit is added. In the case where the measurement basis for a qubit pair is "XX" or "YY", the post-selection circuit 43 is added. In the case where the measurement basis for a qubit pair is "XY" or "YX", the post-selection circuit 44 is added.

FIG. 13 is a flowchart illustrating an example procedure for quantum circuit generation. Hereinafter, the process illustrated in FIG. 13 will be described in order of step numbers.

[Step S301] The quantum circuit generation unit 110 generates an initialization circuit and an Ansatz circuit corresponding to a problem to be solved.

[Step S302] The quantum circuit generation unit 110 determines the pattern of an observable to be measured.

[Step S303] The quantum circuit generation unit 110 determines whether the pattern of the observable is "pattern 1". If the pattern is "pattern 1", the quantum circuit generation unit 110 sets all qubits as targets to be measured, and completes the quantum circuit generation. If the pattern is not "pattern 1", the quantum circuit generation unit 110 advances the process to step S304.

[Step S304] The quantum circuit generation unit 110 determines whether the pattern of the observable is "pattern 2". If the pattern is "pattern 2", the quantum circuit generation unit 110 advances the process to step S305. If the pattern is "pattern 3", the quantum circuit generation unit 110 advances the process to step S307.

[Step S305] The quantum circuit generation unit 110 identifies a qubit pair of the k-th qubit and the l-th qubit of the observable of "pattern 2".

[Step S306] The quantum circuit generation unit 110 adds a post-selection circuit for the identified qubit pair. For example, in the case where the measurement basis for the qubit pair is "XX" or "YY", the quantum circuit generation unit 110 adds the post-selection circuit 43 (see FIG. 11). In the case where the measurement basis for the qubit pair is "XY" or "YX", the quantum circuit generation unit 110 adds the post-selection circuit 44 (see FIG. 11). Thereafter, the quantum circuit generation unit 110 sets all qubits as targets to be measured, and completes the quantum circuit generation.

[Step S307] The quantum circuit generation unit 110 identifies a qubit pair of the k-th qubit and the p-th qubit of the observable of "pattern 3".

[Step S308] The quantum circuit generation unit 110 adds a post-selection circuit for the identified qubit pair.

[Step S309] The quantum circuit generation unit 110 identifies a qubit pair of the l-th qubit and the q-th qubit of the observable of "pattern 3".

[Step S310] The quantum circuit generation unit 110 adds a post-selection circuit for the identified qubit pair. Thereafter, the quantum circuit generation unit 110 sets all qubits as target to be measured, and completes the quantum circuit generation.

After the quantum computer 200 performs quantum computation based on the quantum circuit generated in this way and acquires a measurement result, the ground-state energy computation unit 130 performs a parity check.

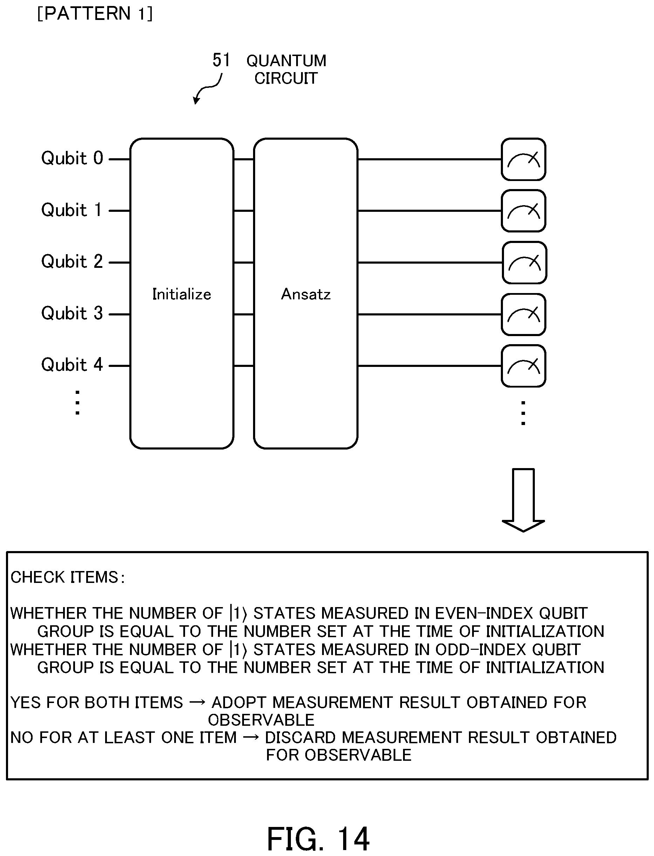

FIG. 14 illustrates an example of a parity check for an observable of "pattern 1". The ground-state energy computation unit 130 checks the following two items, based on the measurement result of a quantum circuit 51 corresponding to the observable of "pattern 1".

· Check item 1

Whether the number of $|1\rangle$ states measured in the even-index qubit group is equal to the number set at the time of initialization.

· Check item 2

Whether the number of $|1\rangle$ states measured in the odd-index qubit group is equal to the number set at the time of initialization.

If both of the two check items have passed (Yes), the ground-state energy computation unit 130 adopts the measurement result obtained for the observable. If at least one of the two check items has failed (No), the ground-state energy computation unit 130 discards the measurement result obtained for the observable.

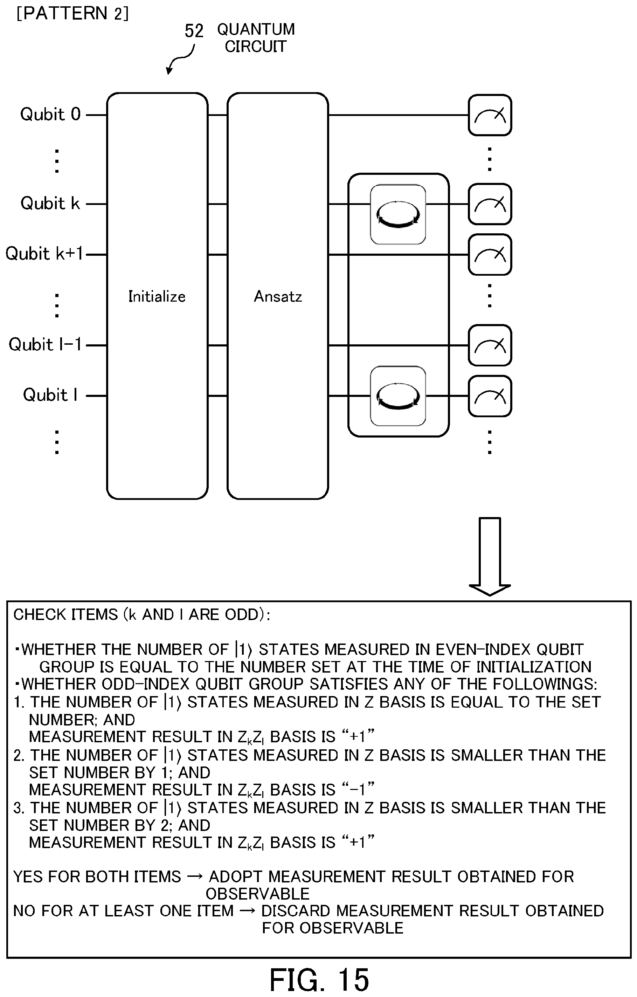

FIG. 15 illustrates an example of a parity check for an observable of "pattern 2". It is assumed that the k-th and l-th qubits of the observable of "pattern 2" are odd-index qubits. In this case, the ground-state energy computation unit 130 checks the following two primary check items, respectively for the even-index qubit group and the odd-index qubit group, based on the measurement result of a quantum circuit 52 corresponding to the observable of "pattern 2".

Primary check item 1

Whether the number of $|1\rangle$ states measured in the even-index qubit group is equal to the number set at the time of initialization.

Primary check item 2

Whether the odd-index qubit group satisfies any one of the following three secondary check items:

· · Secondary check item 1

The number of $|1\rangle$ states measured in the Z basis is equal to the set number, and the measurement result in the $Z_k Z_l$ basis is "+1".

· · Secondary check item 2

The number of $|1\rangle$ states measured in the Z basis is smaller than the set number by "1", and the measurement result in the $Z_k Z_l$ basis is "-1".

· · Secondary check item 3

The number of $|1\rangle$ states measured in the Z basis is smaller than the set number by "2", and the measurement result in the $Z_k Z_l$ basis is "+1".

If both of the two primary check items have passed (Yes), the ground-state energy computation unit 130 adopts the measurement result obtained for the observable. If at least one of the two primary check items has not passed (No), the ground-state energy computation unit 130 discards the measurement result obtained for the observable.

In the case where the k-th and l-th qubits of the observable of "pattern 2" are even-index qubits, the primary check item 1 applies to the odd-index qubit group, and the primary check item 2 applies to the even-index qubit group.

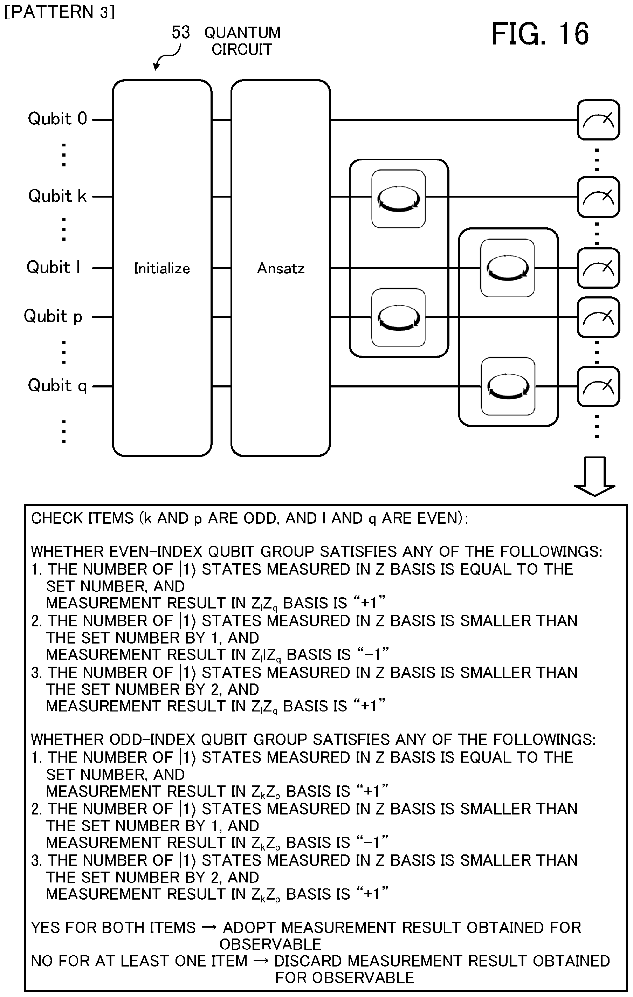

FIG. 16 illustrates an example of a parity check for an observable of "pattern 3". It is assumed that the k-th and p-th qubits of the observable of "pattern 3" are odd-index qubits, and the l-th and q-th qubits are even-index qubits. In this case, the ground-state energy computation unit 130 checks the following two primary check items, respectively for the even-index qubit group and the odd-index qubit group, based on the measurement result of a quantum circuit 53 corresponding to the observable of "pattern 3".

Primary check item 1

Whether the even-index qubit group satisfies any one of the following three secondary check items:

· · Secondary check item 1

The number of $|1\rangle$ states measured in the Z basis is equal to the set number, and the measurement result in the $Z_l Z_q$ basis is "+1".

· · Secondary check item 2

The number of $|1\rangle$ states measured in the Z basis is smaller than the set number by "1", and the measurement result in the $Z_l Z_q$ basis is "-1".

· · Secondary check item 3

The number of $|1\rangle$ states measured in the Z basis is smaller than the set number by "2", and the measurement result in the $Z_l Z_q$ basis is "+1".

The above checks are for the even-index qubit group. Similarly, the following checks are conducted for the odd-index qubit group.

Primary check item 2

Whether the odd-index qubit group satisfies any one of the following three secondary check items:

· · Secondary check item 1
The number of $|1\rangle$ states measured in the Z basis is equal to the set number, and the measurement result in the $Z_kZ_p$ basis is "+1".
· · Secondary check item 2
The number of $|1\rangle$ states measured in the Z basis is smaller than the set number by "1", and the measurement result in the $Z_kZ_p$ basis is "-1".
· · Secondary check item 3
The number of $|1\rangle$ states measured in the Z axis is smaller than the set number by "2", and the measurement result in the $Z_kZ_p$ basis is "+1".

If both of the two primary check items have passed (Yes), the ground-state energy computation unit 130 adopts the measurement result obtained for the observable. If at least one of the two primary check items has not passed (No), the ground-state energy computation unit 130 discards the measurement result obtained for the observable.

In the case where the k-th and p-th qubits of the observable of "pattern 3" are even-index qubits, the primary check item 1 applies to the odd-index qubit group, and the primary check item 2 applies to the even-index qubit group.

The parity check is performed as described above, and an expectation value of the observable is computed using adopted measurement results. This reduces the likelihood that measurement results containing errors are included in the computation of the expectation value, thereby improving the computational accuracy of the expectation value.

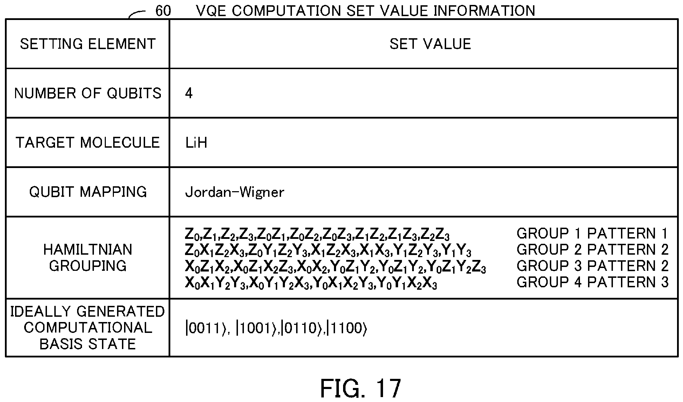

Hereinafter, a first example of a specific VQE computation will be described with reference to FIGS. 17 to 21.

FIG. 17 illustrates an example of setting information for a VQE computation (first example). VQE computation set value information 60 indicates information set as a condition for the VQE computation. In the example of FIG. 17, the number of qubits to be used is "4". A molecule to be computed is "LiH". The Jordan-Wigner mapping is used for mapping the problem to be solved to a qubit space.

The observables of decomposed Hamiltonians may be grouped into four groups. The observables of "group 1" correspond to "pattern 1". The observables of "group 2" and "group 3" correspond to "pattern 2". The observables of "group 4" correspond to "pattern 3".

In the VQE computation illustrated in FIG. 17, it is assumed that the initial state of the qubits is $|0011\rangle$. Then, the computational basis state ideally generated in the VQE computation is one of "$|0011\rangle$, $|1001\rangle$, $|0110\rangle$, and $|1100\rangle$". That is, the number of qubits in the state $|1\rangle$ in the even-index qubit group is "1", and the number of qubits in the state $|1\rangle$ in the odd-index qubit group is also "1".

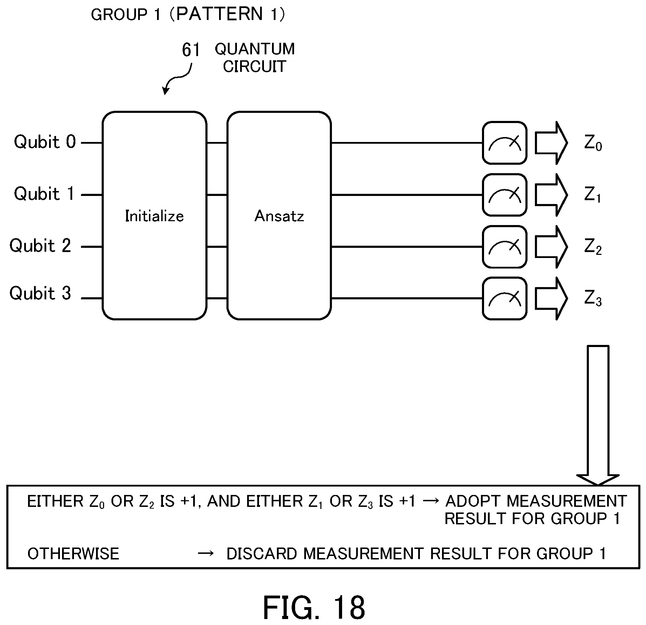

FIG. 18 illustrates an example of a parity check for a measurement result of "group 1" in the VQE computation (first example). A quantum circuit 61 corresponding to "pattern 1" is used to measure an observable of "group 1". If either $Z_0$ or $Z_2$ is "+1" and either $Z_1$ or $Z_3$ is "+1", the measurement result obtained for the observable of "group 1" is adopted. If both $Z_0$ and $Z_2$ are "+1" or both are "-1", or if both $Z_1$ and $Z_3$ are "+1" or both are "-1", the measurement result obtained for the observable of "group 1" is discarded.

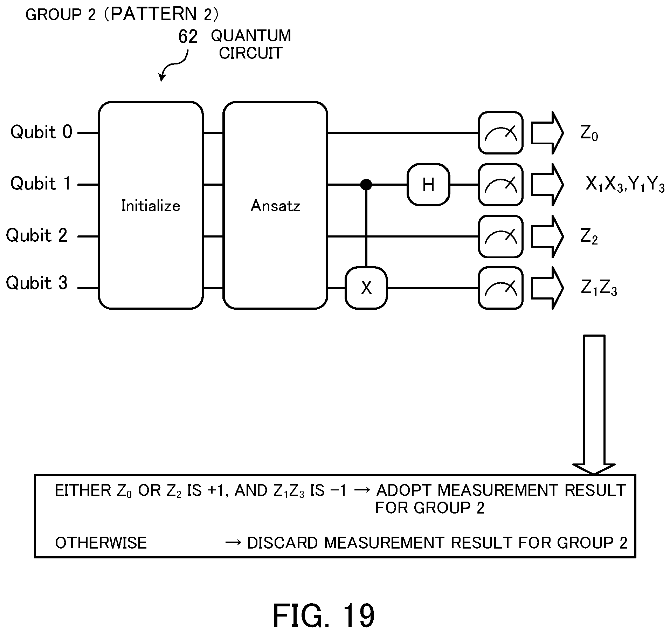

FIG. 19 illustrates an example of a parity check for a measurement result of "group 2" in the VQE computation (first example). A quantum circuit 62 to which a post-selection circuit corresponding to "pattern 2" is added is used to measure an observable of "group 2". In the quantum circuit 62, the post-selection circuit is added for a qubit pair of the first qubit (k = 1) and the third qubit (l = 3).

If either $Z_0$ or $Z_2$ is "+1" and $Z_1Z_3$ is "-1", the measurement result obtained for the observable of "group 2" is adopted. If both $Z_0$ and $Z_2$ are "+1" or both are "-1", or if $Z_1Z_3$ is "+1", the measurement result obtained for the observable of "group 2" is discarded.

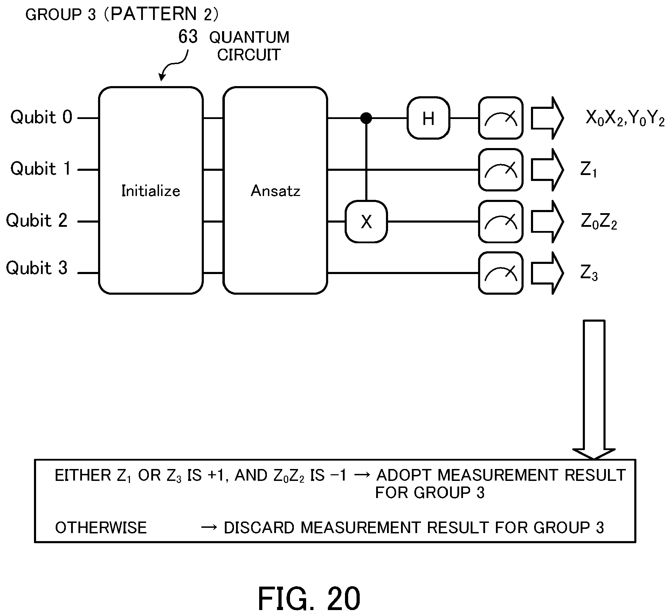

FIG. 20 illustrates an example of a parity check for a measurement result of "group 3" in the VQE computation (first example). A quantum circuit 63 to which a post-selection circuit corresponding to "pattern 2" is added is used to measure an observable of "group 3". In the quantum circuit 63, the post-selection circuit is added for a qubit pair of the zeroth qubit (k = 0) and the second qubit (l = 2).

If either $Z_1$ or $Z_3$ is "+1" and $Z_0Z_2$ is "-1", the measurement result obtained for the observable of "group 3" is adopted. If both $Z_1$ and $Z_3$ are "+1" or both are "-1", or if $Z_0Z_2$ is "+1", the measurement result obtained for the observable of "group 3" is discarded.

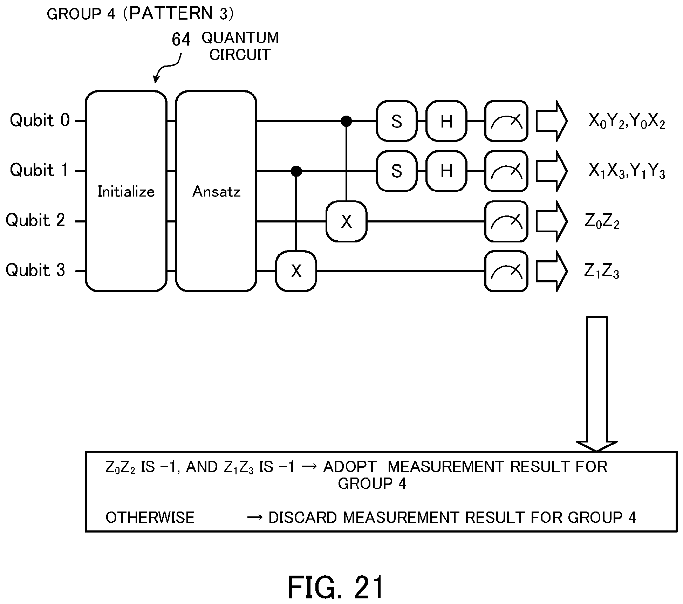

FIG. 21 illustrates an example of a parity check for a measurement result of "group 4" in the VQE computation (first example). A quantum circuit 64 to which a post-selection circuit corresponding to "pattern 3" is added is used to measure an observable of "group 4". In the quantum circuit 64, the post-selection circuit is added for a qubit pair of the zeroth qubit ($k = 0$) and the second qubit ($p = 2$). In addition, the post-selection circuit is added for a qubit pair of the first qubit ($1 = 1$) and the third qubit ($q = 3$).

If $Z_0Z_2$ is "-1" and $Z_1Z_3$ is "-1", the measurement result obtained for the observable of "group 4" is adopted. If $Z_0Z_2$ is "+1" or if $Z_1Z_3$ is "+1", the measurement result obtained for the observable of "group 4" is discarded.

Some VQEs have symmetry. In the case of a symmetric VQE, it may be considered that both a spin-up electron and a spin-down electron are assigned to a single qubit in a quantum circuit. In other words, each qubit is regarded simultaneously as an even-index qubit and an odd-index qubit, regardless of its qubit number. For example, in the case where the state of two qubits is $|01\rangle$, there are one $|0\rangle$ state and one $|1\rangle$ state with respect to the odd-index qubits, and there are one $|0\rangle$ state and one $|1\rangle$ state with respect to the even-index qubits.

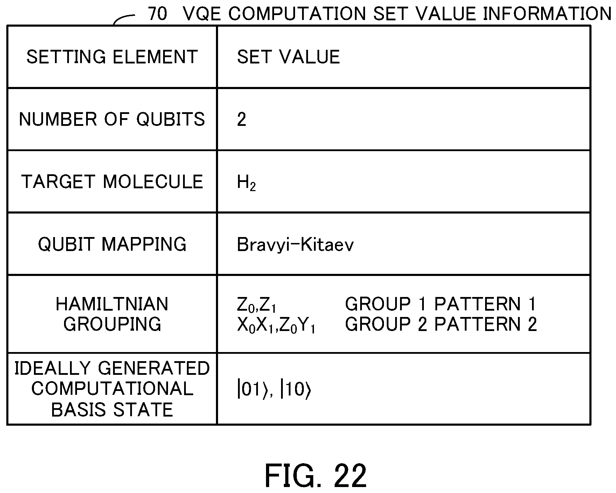

The following describes, as a second example, a case where a VQE computation exhibits symmetry, with reference to FIGS. 22 to 24.

FIG. 22 illustrates an example of setting information for a VQE computation (second example). VQE computation set value information 70 indicates information set as a condition for the VQE computation. In the example of FIG. 22, the number of qubits to be used is "2". A molecule to be computed is "$H_2$". The Bravyi-Kitaev mapping is used for mapping the problem to be solved to a qubit space.

The observables of the decomposed Hamiltonians may be grouped into two groups. The observables of "group 1" correspond to "pattern 1". The observables of "group 2" correspond to "pattern 2".

The computational basis states ideally generated in the VQE computation are "$|01\rangle$ and $|10\rangle$". That is, the number of $|1\rangle$ states in the even-index qubit group is "1", and the number of $|1\rangle$ states in the odd-index qubit group is also "1".

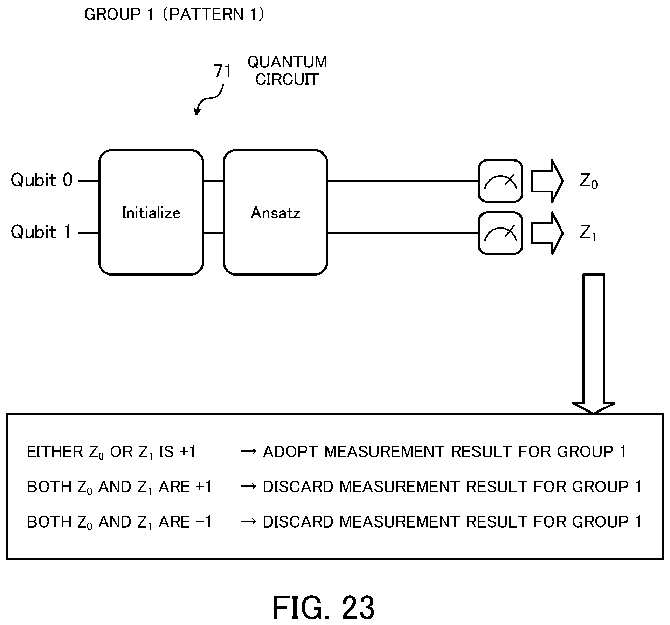

FIG. 23 illustrates an example of a parity check for a measurement result of "group 1" in the VQE computation (second example). A quantum circuit 71 corresponding to "pattern 1" is used to measure an observable of "group 1". If either $Z_0$ or $Z_1$ is "+1", the measurement result obtained for the observable of "group 1" is adopted. If both $Z_0$ and $Z_1$ are "+1" or both are "-1", the measurement result obtained for the observables of "group 1" is discarded.

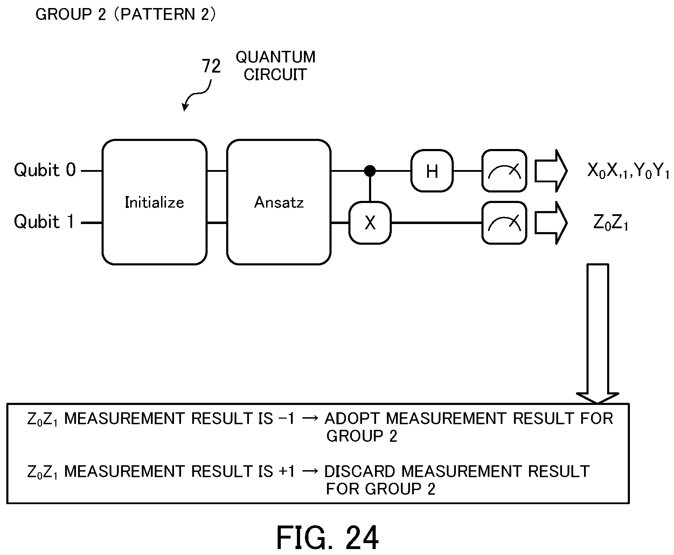

FIG. 24 illustrates an example of a parity check for a measurement result of "group 2" in the VQE computation (second example). A quantum circuit 72 to which a post-selection circuit corresponding to "pattern 2" is added is used to measure an observable of "group 2". In the quantum circuit 72, a post-selection circuit is added for a qubit pair of the zeroth qubit and the first qubit.

If $Z_0Z_1$ is "-1", the measurement result obtained for the observable of "group 2" is adopted. If $Z_0Z_1$ is "+1", the measurement result obtained for the observable of "group 2" is discarded.

As described above, according to the second embodiment, when a measurement result of an observable is obtained in a VQE computation, a parity check is conducted to detect whether an error has occurred in the quantum computer 200, and the measurement result, if confirmed to contain an error, is discarded. This improves the accuracy of an expectation value of the observable. The improvement in the accuracy of expectation values of observables leads to an improvement in the accuracy of Hamiltonian computation, which achieves the VQE computation with high accuracy.

[Other Embodiments]

The second embodiment presents an example in which a parity check is applied to a VQE computation. It is also possible to apply a similar parity check to quantum computations other than the VQE computation, as long as the number of qubits in the $|1\rangle$ state is maintained before and after the computation of a quantum circuit.

The above description is merely indicative of the principles of the embodiments. A wide variety of modifications and changes may also be made by those skilled in the art. The embodiments are not limited to the precise configurations and example applications indicated and described above, and all appropriate modifications and equivalents are regarded as falling within the scope of the embodiments as defined by the appended patent claims and their equivalents.

Reference Signs List

1 Quantum computer
2 Quantum circuit
3. A plurality of qubits
4 First subcircuit
5 Second subcircuit
10 Information processing apparatus
11 Storage unit
12 Processing unit

**Claims**

1.  An information processing program that causes a computer to perform a process comprising:

    instructing a quantum computer to execute a quantum circuit including a first subcircuit, the quantum circuit being such that, among first qubits having a predetermined attribute included in a plurality of qubits on which gate operations are performed, a predetermined number of first qubits are in a state $|1\rangle$ before a gate operation specified by the first subcircuit;
    acquiring, from the quantum computer, a measurement result indicating a state of each of the plurality of qubits after the gate operations specified by the quantum circuit;
    calculating, based on states of the first qubits indicated by the measurement result, a number of first qubits that are in the state $|1\rangle$ after the gate operation specified by the first subcircuit; and
    discarding the measurement result, upon determining that the number of first qubits that are in the state $|1\rangle$ after the gate operation specified by the first subcircuit is different from the predetermined number.

2.  The information processing program according to claim 1, wherein

    the instructing of execution of the quantum circuit includes instructing the quantum computer to execute the quantum circuit in which, before the gate operation specified by the first subcircuit, a number of first qubits that are in the state $|1\rangle$ among the first qubits having a first attribute included in the plurality of qubits is a first value, and a number of first qubits that are in the state $|1\rangle$ among the first qubits having a second attribute included in the plurality of qubits is a second value,
    the calculating of the number of first qubits that are in the state $|1\rangle$ includes calculating a third value indicating a number of first qubits that are in the state $|1\rangle$ after the gate operation specified by the first subcircuit among the first qubits having the first attribute and a fourth value indicating a number of first qubits that are in the state $|1\rangle$ after the gate operation specified by the first subcircuit among the first qubits having the second attribute, and
    the discarding of the measurement result includes discarding the measurement result, upon determining that the third value is different from the first value or that the fourth value is different from the second value.

3.  The information processing program according to claim 2, wherein

    the first qubits having the first attribute are qubits each indicating presence or absence of a spin-up electron in one of a plurality of molecular orbitals of a molecule, and
    the first qubits having the second attribute are qubits each indicating presence or absence of a spin-down electron in one of the plurality of molecular orbitals of the molecule.

4.  The information processing program according to claim 2, wherein

    the first qubits having the first attribute are even-numbered qubits in an arrangement indicated by the quantum circuit, and
    qubits having the second attribute are odd-numbered qubits in the arrangement indicated by the quantum circuit.

5.  The information processing program according to claim 1, further causing the computer to perform a process comprising:

    identifying, among the first qubits, a second qubit and a third qubit whose states are to be measured in an X basis or a Y basis after the gate operation specified by the first subcircuit,
    generating a second subcircuit that transforms a state of the second qubit into a state representing a tensor product of a measurement basis of the second qubit and a measurement basis of the third qubit, and that transforms a state of the third qubit into a state representing a tensor product of a Z basis of the second qubit and a Z basis of the third qubit, and
    generating the quantum circuit by adding the second subcircuit after the first subcircuit.

6.  The information processing program according to claim 5, wherein:

    the calculating of the number of first qubits that are in the state $|1\rangle$ includes

        determining, in response to a measurement value of the state of the third qubit being "+1", that both the second qubit and the third qubit after the gate operation specified by the first subcircuit are in the state |1⟩ or both are in a state |0⟩, and

determining, in response to the measurement value of the state of the third qubit being "-1", that one of the second qubit or the third qubit after the gate operation specified by the first subcircuit is in the state |1⟩ and another of the second qubit or the third qubit is in the state 10); and

the discarding of the measurement result includes discarding the measurement result in response to none of a first condition, a second condition, or a third condition being satisfied,

the first condition being that, among fourth qubits that are the first qubits other than the second qubit and the third qubit, a number of fourth qubits in the state |1⟩ is N, N denoting the predetermined number that is an integer greater than or equal to 0, and the measurement value of the state of the third qubit is "+1",

the second condition being that the number of fourth qubits in the state |1⟩ is N - 1 and the measurement value of the state of the third qubit is "-1"

the third condition being that the number of fourth qubits in the state |1⟩ is N - 2 and the measurement value of the state of the third qubit is "+1".

7. The information processing program according to claim 1, wherein the first subcircuit represents a series of gate operations such as to maintain, except where an error occurs, the number of first qubits in the state |1⟩ before and after the gate operation specified by the first subcircuit.

8. The information processing program according to claim 1, wherein the first subcircuit is an Ansatz circuit representing a wavefunction for computing a Hamiltonian in a variational quantum eigensolver (VQE).

9. An information processing method executed by a computer, the information processing method comprising:

instructing a quantum computer to execute a quantum circuit including a first subcircuit, the quantum circuit being such that, among first qubits having a predetermined attribute included in a plurality of qubits on which gate operations are performed, a predetermined number of first qubits are in a state |1⟩ before a gate operation specified by the first subcircuit;

acquiring, from the quantum computer, a measurement result indicating a state of each of the plurality of qubits after the gate operations specified by the quantum circuit;

calculating, based on states of the first qubits indicated by the measurement result, a number of first qubits that are in the state |1⟩ after the gate operation specified by the first subcircuit; and

discarding the measurement result, upon determining that the number of first qubits that are in the state |1⟩ after the gate operation specified by the first subcircuit is different from the predetermined number.

10. An information processing apparatus comprising:
a processing unit configured to

instruct a quantum computer to execute a quantum circuit including a first subcircuit, the quantum circuit being such that, among first qubits having a predetermined attribute included in a plurality of qubits on which gate operations are performed, a predetermined number of first qubits are in a state |1⟩ before a gate operation specified by the first subcircuit;

acquire, from the quantum computer, a measurement result indicating a state of each of the plurality of qubits after the gate operations specified by the quantum circuit;

calculate, based on states of the first qubits indicated by the measurement result, a number of first qubits that are in the state |1⟩ after the gate operation specified by the first subcircuit; and

discard the measurement result, upon determining that the number of first qubits that are in the state |1⟩ after the gate operation specified by the first subcircuit is different from the predetermined number.

QUANTUM
COMPUTER — 1

INFORMATION PROCESSING APPARATUS — 10

11 STORAGE UNIT

2 QUANTUM CIRCUIT

A PLURALITY OF QUBITS

4     5

3 {
Qubit 0
Qubit 1    FIRST
Qubit 2    SUBCIRCUIT
⋮          (Ansatz)

SECOND
SUBCIRCUIT
(post
selection)
}

EVEN-NUMBERED QUBITS: NUMBER OF $|1\rangle$ ⌉
STATES = NUMBER OF $|1\rangle$ STATES    } NUMBER OF $|1\rangle$
ODD-NUMBERED QUBITS: NUMBER OF $|1\rangle$    STATES
STATES = NUMBER OF $|1\rangle$ STATES ⌋    MAINTAINED

PROCESSING UNIT

12

EXECUTION
INSTRUCTION

MEASUREMENT
RESULT
ACQUISITION

CALCULATE THE NUMBER OF
QUBITS IN STATE $|1\rangle$

SUBSET {Qubit 1, Qubit 3, ···}

SUBSET {Qubit 0, Qubit 2, ···}
·Z-BASIS MEASUREMENT                ·ZZ-BASIS MEASUREMENT
MEASUREMENT VALUE 「+1」          MEASUREMENT VALUE 「+1」
     → $|0\rangle$                          → $|00\rangle$ or $|11\rangle$
MEASUREMENT VALUE 「−1」          MEASUREMENT VALUE 「−1」
     → $|1\rangle$                          → $|01\rangle$ or $|10\rangle$

FOR ALL SUBSETS: NUMBER OF $|1\rangle$ STATES = PREDETERMINED NUMBER
     → ADOPT MEASUREMENT RESULT
FOR SOME SUBSETS: NUMBER OF $|1\rangle$ STATES ≠ PREDETERMINED NUMBER
     → DISCARD MEASUREMENT RESULT

FIG. 1

FIG. 2

**FIG. 3**

FIG. 4

HAMILTONIAN

$$H=H_1+H_2+\cdots$$

$$H_i=aO_{i1}+bO_{i2}+\cdots$$

200 QUANTUM COMPUTER

100 CLASSICAL COMPUTER

$\psi(\theta)$

QUANTUM MEASUREMENT

30

QUANTUM CIRCUIT

$\langle H_1 \rangle$

$\langle H_2 \rangle$

$\langle H_N \rangle$

ADD

$\langle H_1 \rangle$
+
$\langle H_2 \rangle$
+
...
+
$\langle H_N \rangle$

OPTIMIZE $\theta$

UPDATE $\theta$

FIG. 5

41 QUANTUM
CIRCUIT

INITIALIZATION
CIRCUIT
41a

ANSATZ
CIRCUIT
41b

POST-SELECTION
CIRCUIT
41c

Qubit 0 ——

Qubit 1 ——

Initialize

Ansatz

post
selection

PARITY
CHECK

ERROR
DETECTED

NO ERROR
DETECTED

ADOPT
MEASUREMENT
RESULT

REJECT
MEASUREMENT
RESULT

FIG. 6

FIG. 7

FIG. 8

HAMILTONIAN COMPUTATION
START

S201

COMPUTE $\langle H_i \rangle$ FOR i=1,2,...

S202

QUANTUM CIRCUIT GENERATION

S203

REPEAT UNTIL NUMBER OF
MEASUREMENT RESULTS REACHES
NUMBER OF SHOTS

S204

INSTRUCT QUANTUM COMPUTER TO
EXECUTE QUANTUM CIRCUIT

S205

PERFORM PARITY CHECK AND $\langle H_i \rangle$
SIMULTANEOUSLY

S206

HAS PARITY CHECK PASSED?

NO

S208

DISCARD MEASUREMENT RESULT

YES

S207

STORE MEASUREMENT RESULT

S209

NUMBER OF MEASUREMENT RESULTS
HAS REACHED NUMBER OF SHOTS

S210

COMPLETION OF $\langle H_i \rangle$ COMPUTATION
FOR i=1,2,...

S211

DERIVE $E=\langle H \rangle=\langle H_1 \rangle+\langle H_2 \rangle+\cdots$

END

FIG. 9

[PATTERN 1]

## OBSERVABLE FORMED OF ONLY TEMSOR PRODUCT OF Z AND I

42a    42b

Qubit 0 ——

Qubit 1 ——

Initialize    Ansatz

·Z-BASIS MEASUREMENT

Z-BASIS MEASUREMENT OF STATE $|0\rangle$:
$\langle 0|Z|0\rangle = +1$

Z-BASIS MEASUREMENT OF STATE $|1\rangle$:
$\langle 1|Z|1\rangle = -1$

## FIG. 10

[PATTERN 2]

$$(X \text{ or } Y)_k Z_{k+1} \cdots Z_{l-1} (X \text{ or } Y)_L$$
$$Z_p (X \text{ or } Y)_k Z_{k+1} \cdots Z_{l-1} (X \text{ or } Y)_l$$
$$(X \text{ or } Y)_k Z_{k+1} \cdots Z_{l-1} (X \text{ or } Y)_l Z_p$$

FIG. 11

·ZZ-BASIS MEASUREMENT

ZZ-BASIS MEASUREMENT OF STATES $|00\rangle$ AND $|11\rangle$:
$\langle 00|ZZ|00\rangle = \langle 11|ZZ|11\rangle = +1$

ZZ-BASIS MEASUREMENT OF STATES $|01\rangle$ AND $|10\rangle$:
$\langle 10|ZZ|01\rangle = \langle 01|ZZ|10\rangle = -1$

[PATTERN 3]

$$(X \text{ or } Y)_k Z_{k+1} \cdots Z_{l-1} (X \text{ or } Y)_l \, (X \text{ or } Y)_p Z_{p+1} \cdots Zq-1_{q-1} (X \text{ or } Y)_q$$

FIG. 12

```
         ╭─────────────────╮
         │ QUANTUM CIRCUIT │
         │  GENERATION     │
         │    START        │
         ╰─────────────────╯
                 │
                 ▼
        ┌─────────────────┐   S301
        │ GENERATE INITIALIZATION │
        │ CIRCUIT AND ANSATZ      │
        │ CIRCUIT                 │
        └─────────────────┘
                 │
                 ▼
        ┌─────────────────┐   S302
        │ DETERMINE PATTERN OF │
        │ OBSERVABLE           │
        └─────────────────┘
```

YES

S303

PATTERN 1?

NO

S304

PATTERN 2?

NO

YES

S305

IDENTIFY PAIR OF k–th AND
l–th QUBITS

S307

IDENTIFY PAIR OF k–th AND
p–th QUBITS

S306

ADD POST–SELECTION
CIRCUIT

S308

ADD POST–SELECTION
CIRCUIT

S309

IDENTIFY PAIR OF l–th AND
q–th QUBITS

S310

ADD POST–SELECTION
CIRCUIT

END

FIG. 13

[PATTERN 1]

51 QUANTUM
CIRCUIT

Qubit 0 ——
Qubit 1 ——
Qubit 2 ——
Qubit 3 ——
Qubit 4 ——

Initialize    Ansatz

CHECK ITEMS:

WHETHER THE NUMBER OF |1⟩ STATES MEASURED IN EVEN-INDEX QUBIT
    GROUP IS EQUAL TO THE NUMBER SET AT THE TIME OF INITIALIZATION
WHETHER THE NUMBER OF |1⟩ STATES MEASURED IN ODD-INDEX QUBIT
    GROUP IS EQUAL TO THE NUMBER SET AT THE TIME OF INITIALIZATION

YES FOR BOTH ITEMS → ADOPT MEASUREMENT RESULT OBTAINED FOR
                     OBSERVABLE
NO FOR AT LEAST ONE ITEM → DISCARD MEASUREMENT RESULT OBTAINED
                           FOR OBSERVABLE

FIG. 14

[PATTERN 2]

52  QUANTUM
CIRCUIT

CHECK ITEMS (k AND l ARE ODD):

· WHETHER THE NUMBER OF |1⟩ STATES MEASURED IN EVEN-INDEX QUBIT
   GROUP IS EQUAL TO THE NUMBER SET AT THE TIME OF INITIALIZATION
· WHETHER ODD-INDEX QUBIT GROUP SATISFIES ANY OF THE FOLLOWINGS:
1. THE NUMBER OF |1⟩ STATES MEASURED IN Z BASIS IS EQUAL TO THE SET
   NUMBER; AND
   MEASUREMENT RESULT IN $Z_k Z_l$ BASIS IS "+1"
2. THE NUMBER OF |1⟩ STATES MEASURED IN Z BASIS IS SMALLER THAN THE
   SET NUMBER BY 1; AND
   MEASUREMENT RESULT IN $Z_k Z_l$ BASIS IS "−1"
3. THE NUMBER OF |1⟩ STATES MEASURED IN Z BASIS IS SMALLER THAN THE
   SET NUMBER BY 2; AND
   MEASUREMENT RESULT IN $Z_k Z_l$ BASIS IS "+1"

YES FOR BOTH ITEMS → ADOPT MEASUREMENT RESULT OBTAINED FOR
                OBSERVABLE
NO FOR AT LEAST ONE ITEM → DISCARD MEASUREMENT RESULT OBTAINED
                FOR OBSERVABLE

FIG. 15

[PATTERN 3]

53 QUANTUM CIRCUIT

# FIG. 16

Qubit 0

Qubit k

Qubit l

Qubit p

Qubit q

Initialize

Ansatz

CHECK ITEMS (k AND p ARE ODD, AND l AND q ARE EVEN):

WHETHER EVEN-INDEX QUBIT GROUP SATISFIES ANY OF THE FOLLOWINGS:
1. THE NUMBER OF $|1\rangle$ STATES MEASURED IN Z BASIS IS EQUAL TO THE
   SET NUMBER, AND
   MEASUREMENT RESULT IN $Z_l Z_q$ BASIS IS "+1"
2. THE NUMBER OF $|1\rangle$ STATES MEASURED IN Z BASIS IS SMALLER THAN
   THE SET NUMBER BY 1, AND
   MEASUREMENT RESULT IN $Z_l I Z_q$ BASIS IS "−1"
3. THE NUMBER OF $|1\rangle$ STATES MEASURED IN Z BASIS IS SMALLER THAN
   THE SET NUMBER BY 2, AND
   MEASUREMENT RESULT IN $Z_l Z_q$ BASIS IS "+1"

WHETHER ODD-INDEX QUBIT GROUP SATISFIES ANY OF THE FOLLOWINGS:
1. THE NUMBER OF $|1\rangle$ STATES MEASURED IN Z BASIS IS EQUAL TO THE
   SET NUMBER, AND
   MEASUREMENT RESULT IN $Z_k Z_p$ BASIS IS "+1"
2. THE NUMBER OF $|1\rangle$ STATES MEASURED IN Z BASIS IS SMALLER THAN
   THE SET NUMBER BY 1, AND
   MEASUREMENT RESULT IN $Z_k Z_p$ BASIS IS "−1"
3. THE NUMBER OF $|1\rangle$ STATES MEASURED IN Z BASIS IS SMALLER THAN
   THE SET NUMBER BY 2, AND
   MEASUREMENT RESULT IN $Z_k Z_p$ BASIS IS "+1"

YES FOR BOTH ITEMS → ADOPT MEASUREMENT RESULT OBTAINED FOR
                     OBSERVABLE
NO FOR AT LEAST ONE ITEM → DISCARD MEASUREMENT RESULT OBTAINED
                     FOR OBSERVABLE

60    VQE COMPUTATION SET VALUE INFORMATION

| SETTING ELEMENT | SET VALUE | | |
|---|---|---|---|
| NUMBER OF QUBITS | 4 | | |
| TARGET MOLECULE | LiH | | |
| QUBIT MAPPING | Jordan-Wigner | | |
| HAMILTNIAN GROUPING | $Z_0,Z_1,Z_2,Z_3,Z_0Z_1,Z_0Z_2,Z_0Z_3,Z_1Z_2,Z_1Z_3,Z_2Z_3$ | GROUP 1 | PATTERN 1 |
| | $Z_0X_1Z_2X_3,Z_0Y_1Z_2Y_3,X_1Z_2X_3,X_1X_3,Y_1Z_2Y_3,Y_1Y_3$ | GROUP 2 | PATTERN 2 |
| | $X_0Z_1X_2,X_0Z_1X_2Z_3,X_0X_2,Y_0Z_1Y_2,Y_0Z_1Y_2,Y_0Z_1Y_2Z_3$ | GROUP 3 | PATTERN 2 |
| | $X_0X_1Y_2Y_3,X_0Y_1Y_2X_3,Y_0X_1X_2Y_3,Y_0Y_1X_2X_3$ | GROUP 4 | PATTERN 3 |
| IDEALLY GENERATED COMPUTATIONAL BASIS STATE | $|0011\rangle, |1001\rangle,|0110\rangle,|1100\rangle$ | | |

FIG. 17

GROUP 1 (PATTERN 1)

61 QUANTUM
CIRCUIT

Qubit 0 — | Initialize | — | Ansatz | — ⟨measurement⟩ ⇒ $Z_0$

Qubit 1 — ⟨measurement⟩ ⇒ $Z_1$

Qubit 2 — ⟨measurement⟩ ⇒ $Z_2$

Qubit 3 — ⟨measurement⟩ ⇒ $Z_3$

EITHER $Z_0$ OR $Z_2$ IS +1, AND EITHER $Z_1$ OR $Z_3$ IS +1 → ADOPT MEASUREMENT
RESULT FOR GROUP 1

OTHERWISE  → DISCARD MEASUREMENT RESULT FOR GROUP 1

FIG. 18

GROUP 2 (PATTERN 2)

62 QUANTUM
CIRCUIT

EITHER $Z_0$ OR $Z_2$ IS +1, AND $Z_1Z_3$ IS −1 → ADOPT MEASUREMENT RESULT FOR GROUP 2

OTHERWISE → DISCARD MEASUREMENT RESULT FOR GROUP 2

FIG. 19

GROUP 3 (PATTERN 2)

63 QUANTUM CIRCUIT

EITHER $Z_1$ OR $Z_3$ IS +1, AND $Z_0Z_2$ IS −1 → ADOPT MEASUREMENT RESULT FOR GROUP 3

OTHERWISE → DISCARD MEASUREMENT RESULT FOR GROUP 3

FIG. 20

GROUP 4 (PATTERN 3)

64 QUANTUM CIRCUIT

Qubit 0 — Initialize — Ansatz — $X_0Y_2, Y_0X_2$

Qubit 1 — $X_1X_3, Y_1Y_3$

Qubit 2 — $Z_0Z_2$

Qubit 3 — $Z_1Z_3$

$Z_0Z_2$ IS −1, AND $Z_1Z_3$ IS −1 → ADOPT MEASUREMENT RESULT FOR GROUP 4

OTHERWISE → DISCARD MEASUREMENT RESULT FOR GROUP 4

FIG. 21

70 VQE COMPUTATION SET VALUE INFORMATION

| SETTING ELEMENT | SET VALUE |
|---|---|
| NUMBER OF QUBITS | 2 |
| TARGET MOLECULE | $H_2$ |
| QUBIT MAPPING | Bravyi–Kitaev |
| HAMILTNIAN GROUPING | $Z_0,Z_1$       GROUP 1 PATTERN 1<br>$X_0X_1,Z_0Y_1$    GROUP 2 PATTERN 2 |
| IDEALLY GENERATED COMPUTATIONAL BASIS STATE | $|01\rangle, |10\rangle$ |

FIG. 22

GROUP 1 （PATTERN 1）

71 QUANTUM CIRCUIT

Qubit 0 — Initialize — Ansatz — $Z_0$

Qubit 1 — Initialize — Ansatz — $Z_1$

EITHER $Z_0$ OR $Z_1$ IS +1    → ADOPT MEASUREMENT RESULT FOR GROUP 1

BOTH $Z_0$ AND $Z_1$ ARE +1    → DISCARD MEASUREMENT RESULT FOR GROUP 1

BOTH $Z_0$ AND $Z_1$ ARE −1    → DISCARD MEASUREMENT RESULT FOR GROUP 1

FIG. 23

GROUP 2 (PATTERN 2)

72 QUANTUM
CIRCUIT

Qubit 0 —

Qubit 1 —

Initialize | Ansatz | [●] [X] [H] [measure] ⟹ $X_0X_{,1}, Y_0Y_1$

[measure] ⟹ $Z_0Z_1$

$Z_0Z_1$ MEASUREMENT RESULT IS −1 → ADOPT MEASUREMENT RESULT FOR GROUP 2

$Z_0Z_1$ MEASUREMENT RESULT IS +1 → DISCARD MEASUREMENT RESULT FOR GROUP 2

FIG. 24

## INTERNATIONAL SEARCH REPORT

| International application No. |
|---|
| **PCT/JP2023/029841** |

**A. CLASSIFICATION OF SUBJECT MATTER**

*G06N 10/70*(2022.01)i
FI: G06N10/70

According to International Patent Classification (IPC) or to both national classification and IPC

**B. FIELDS SEARCHED**

Minimum documentation searched (classification system followed by classification symbols)

G06N10/70

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2022/003134 A1 (OXFORD UNIVERSITY INNOVATION LIMITED) 06 January 2022 (2022-01-06) p. 21, line 7 to p. 27, line 10 | 1, 7-10 |
| A | all pages, all drawings | 2-6 |

☐ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 October 2023** | **24 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/029841**

| Patent document cited in search report | Publication date (day/month/year) | Patent family member(s) | Publication date (day/month/year) |
|---|---|---|---|
| WO 2022/003134 A1 | 06 January 2022 | EP 3933717 A1 paragraphs [0045]-[0069] | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023501752 A
- JP 2022088556 A
- US 20220383179

**Non-patent literature cited in the description**

- Error-Mitigated Digital Quantum Simulation. **SAM MCARDLE** ; **XIAO YUAN** ; **SIMON BENJAMIN**. PHYSICAL REVIEW LETTERS. American Physical Society, 08 May 2019, vol. 122, 180501